(19) Europäisches Patentamt / European Patent Office / Office européen des brevets

(11) **EP 2 790 190 A1**

## EUROPEAN PATENT APPLICATION
published in accordance with Art. 153(4) EPC

(43) Date of publication:
**15.10.2014 Bulletin 2014/42**

(21) Application number: **12855254.4**

(22) Date of filing: **25.06.2012**

(51) Int Cl.:
*H01B 12/08* (2006.01)    *H01B 12/16* (2006.01)
*H01L 39/04* (2006.01)    *H02G 15/34* (2006.01)

(86) International application number:
**PCT/JP2012/066128**

(87) International publication number:
**WO 2013/084528 (13.06.2013 Gazette 2013/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.12.2011 JP 2011267407**
**08.02.2012 JP 2012024932**

(71) Applicant: **Sumitomo Electric Industries, Ltd.**
**Chuo-ku**
**Osaka-shi**
**Osaka 541-0041 (JP)**

(72) Inventor: **FUKUDA, Ryosuke**
**Kume-gun**
**Okayama 708-1527 (JP)**

(74) Representative: **Kreutzer, Ulrich et al**
**Cabinet Beau de Loménie**
**Lessingstrasse 6**
**80336 München (DE)**

(54) **SUPERCONDUCTING CABLE, SUPERCONDUCTING CABLE LINE, METHOD OF INSTALLING SUPERCONDUCTING CABLE, METHOD OF OPERATING SUPERCONDUCTING CABLE LINE**

(57) A superconducting cable (1000) includes a superconducting conductor layer; and a flow path of a coolant (130c) cooling the superconducting conductor layer to a superconducting state. This cable (1000) includes a core (110) including the superconducting conductor layer and an insulating layer; a coolant tube (130) forming a coolant flow path and arranged in parallel to the core (110) so as to cool the superconducting conductor layer; and a housing tube (150) of the core (110) and the coolant tube (130).

FIG.1

100c : 110, 130, 170

**Description**

TECHNICAL FIELD

The present invention relates to a superconducting cable, a superconducting cable line, a method of installing the superconducting cable, and a method of operating the superconducting cable line, and particularly to a superconducting cable suitable for constructing a long-distance or an ultra-long distance power transmission line.

BACKGROUND ART

In general, a superconducting cable includes a cable core provided with a former having an outer circumference on which a superconducting conductor layer and an insulating layer are formed; and a cable heat-insulating tube housing the cable core therein. This superconducting cable is used in the state where the cable core is cooled to a cryogenic temperature with a coolant such as liquid nitrogen (for example, see Japanese Patent Laying-Open No. 2011-28936 (PTD 1)).

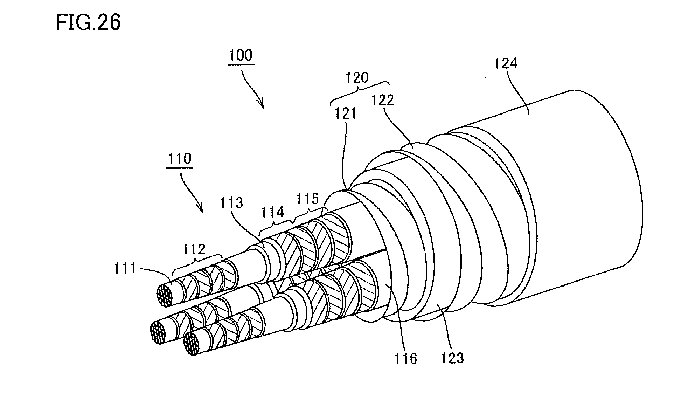

As a superconducting cable described above, a superconducting cable 100 is known in which a plurality of cable cores 110 are housed in one cable heat-insulating tube 120, as shown in Fig. 26.

Representative cable core 110 includes a former 111, an inside superconducting conductor layer 112, an inner semiconducting layer (not shown), a cable insulating layer 113, an outer semiconducting layer (not shown), an outside superconducting conductor layer 114, a normal-conducting layer 115, and a protective layer 116 that are arranged in this order from the center. In addition, cable heat-insulating tube 120 includes an inner tube 121 and an outer tube 122, between which a vacuum is produced. A heat-insulating material 123 such as super insulation is disposed in this vacuum space. Furthermore, an anticorrosive layer 124 is formed on the outer circumference of outer tube 122. The space between each cable core 110 and heat-insulating tube 120 is utilized as a flow path for a coolant.

CITATION LIST

PATENT DOCUMENT

PTD 1: Japanese Patent Laying-Open No. 2011-28936

SUMMARY OF INVENTION

TECHNICAL PROBLEM

According to the above-described superconducting cable, however, it is difficult to construct a long-distance line for production-related, structure-related and installation-related reasons described below.

(1) Usually, a superconducting cable is shipped from a factory in the state where a core housed in a heat-insulating tube is wound around a drum, which is then conveyed to an installation site where it is installed. Accordingly, the diameter of the superconducting cable is relatively large. Thus, even if a drum having a maximum conveyable size is used, there is a limitation on the length of the superconducting cable that can be wound around one drum. In addition, since the superconducting cable should be shipped from a factory in the state where the core and the heat-insulating tube are combined, it is difficult to manufacture a long superconducting cable.

(2) In construction of a long-distance line, it is necessary to smoothly circulate a coolant through the entire length of the line. The coolant flow path is formed in the space between the inner tube and the core. In particular, in the case of a three-core integrated superconducting cable, its cross-sectional shape is complicated. In addition, an installation path has some portions where a cable is bent, and the position of the core within the inner tube is displaced from the center of the inner tube near the portion where the cable is bent. Accordingly, not only in a three-core integrated superconducting cable but also in a single-core superconducting cable, the cross-sectional shape of the coolant flow path is not uniform in the longitudinal direction of the cable. Therefore, in the configuration of the conventional superconducting cable, it becomes more difficult to smoothly circulate a coolant as the line becomes longer.

(3) It is necessary to produce a vacuum in the heat-insulating tube at the cable installation site. However, it usually takes about one month to produce a vacuum in the heat-insulating tube of approximately 200 m. Accordingly, when the line becomes longer, the effort and time required to produce a vacuum may impose a significant restriction for an installation operation.

The present invention has been made in light of the above-described circumstances, and an object of the present invention is to provide a superconducting cable allowing relatively longer-distance power transmission as compared with the conventional superconducting cable, and a line constructed using the cable.

Another object of the present invention is to provide a method of installing the superconducting cable of the present invention as described above.

Still another object of the present invention is to provide a method of operating the superconducting cable line of the present invention as described above.

SOLUTION TO PROBLEM

In order to allow a coolant used for a superconducting cable to smoothly circulate over a long distance, the present inventor has conducted a study to achieve a configuration in which a coolant flow path has a cross-sectional shape formed as uniformly as possible in the longitudinal direction of this flow path. As a result, the present inventor has conceived that the space between a heat-insulating tube and a core is not used as a coolant flow path, but a conduit for coolant circulation independent of the heat-insulating tube and the core is separately used. Thus, the present inventor achieved the present invention. The present invention provides a superconducting cable having a configuration described below as a basic configuration, and defines a method of installing the superconducting cable, a line formed employing the superconducting cable, and a method of operating the superconducting cable line.

[Superconducting Cable]

A superconducting cable according to the present invention includes a superconducting conductor layer, and a flow path of a coolant cooling the superconducting conductor layer to a superconducting state. This cable includes a core having the superconducting conductor layer and an insulating layer; a coolant tube forming the coolant flow path and arranged in parallel to the core so as to cool the superconducting conductor layer; and a housing tube of the core and the coolant tube.

According to this configuration, when the coolant tube independent of the housing tube is arranged in parallel to the core, the cross-sectional shape of the coolant flow path can be determined by selecting a cross-sectional shape of the coolant tube. Accordingly, by selecting a conduit having an almost uniform cross-sectional shape in its longitudinal direction as a coolant tube, the coolant can be smoothly circulated, thereby allowing implementation of a long superconducting cable.

Although the conventional superconducting cable is configured such that the core is disposed within the coolant flow path, the superconducting cable of the present invention is configured such that the coolant flow path is basically provided independently of the core. Accordingly, the length of the core can be determined irrespective of the unit section length of the coolant flow path, and a long core is produced, thereby allowing implementation of a long superconducting cable. The method of manufacturing this superconducting cable will be described later. In addition, the unit section length of the coolant flow path corresponds to a distance in which a coolant supplied from a cooling station flows through a coolant tube back to the same cooling station or to another cooling station. In the former case, the cooling unit length corresponds to a forward-and-return path of the coolant flow path through which the coolant circulates. In the latter case, the cooling unit length corresponds to a forward path or a return path of the coolant flow path. If a long superconducting cable is used to construct a line, the unit section length of the coolant flow path can also be increased. Therefore, the number of the cooling stations for cooling and pumping the coolant can also be reduced throughout the entire length of the line.

According to one embodiment of the superconducting cable of the present invention, a plurality of the coolant tubes are twisted so as to surround an outer circumference of the core.

According to this configuration, a plurality of coolant tubes surround the core, so that the core can be efficiently cooled. Particularly, by twisting the plurality of coolant tubes around the outer circumference of the core, the core can be cooled almost uniformly throughout the entire area of the core in the circumferential direction and in the longitudinal direction. In addition, the states of the coolants within the plurality of coolant tubes can be rendered almost uniform on any of the cross sections of the core in the longitudinal direction. This is because the coolant tubes can be prevented from being unevenly distributed over the core.

According to one embodiment of the superconducting cable of the present invention, the plurality of coolant tubes surrounds a plurality of the cores.

According to this configuration, by housing a plurality of cores in one housing tube, power transmission of ultra-large capacity can be ensured and power transmission through multiple channels can be readily implemented. Accordingly, even if some channels are interrupted, power transmission can be ensured through another channel. Also, power is transmitted using some of the cores at the beginning of installation, and at least a part of the remaining cores is used ex post facto, to allow an increase in the capacity. Particularly, by surrounding a plurality of cores by a plurality of coolant tubes, these cores can be collectively cooled, and the cooling station (including a refrigerator and a pump) used for cooling the plurality of cores (multiple channels) can be shared.

According to one embodiment of the superconducting cable of the present invention, the core and the plurality of coolant tubes twisted to surround the outer circumference of the core are combined to form a composite core unit. A plurality of the composite core units are provided within the housing tube.

According to this configuration, by housing a plurality of composite core units within one housing tube, power transmission of ultra-large capacity can be ensured and power transmission through multiple channels can be readily implemented. Accordingly, even if some of the channels are interrupted, power transmission can be ensured through another channel. Also, power can be transmitted using some of the cores at the beginning of installation, and at least a part of the remaining cores is used ex post facto, to allow an increase in the capacity. In particular, cores or a core group forming this unit can be cooled for each composite core unit. Accordingly, even if a defect occurs in the cooling station of any one of the cores (the core group), no problem occurs in cooling of other cores (the core group).

According to one embodiment of the superconducting cable of the present invention, the core and a plurality of the coolant tubes twisted to surround the outer circumference of the core are combined to form a composite core unit. A plurality of additional coolant tubes arranged to surround an outer circumference of the composite core unit are provided.

According to this configuration, an additional coolant tube is further provided in addition to the coolant tubes forming a composite core unit, thereby allowing the core to be much more sufficiently cooled. Accordingly, even if the cooling stations for cooling and circulating a coolant are arranged at relatively long intervals in the ultra-long distance superconducting cable line, the core can be sufficiently cooled throughout its entire length. Particularly, as described later, even when the housing tube is filled with a heat-insulating material without producing a vacuum therein, the core can be sufficiently cooled. Furthermore, even if a defect occurs in any of the coolant tubes forming a composite core unit or in any of the additional coolant tubes, the core can be cooled using other additional coolant tubes. Thus, a highly reliable superconducting cable line can be constructed even over a long distance. In addition, by changing the temperature and the flow rate of the coolant in each additional coolant tube, or by changing the number of the additional coolant tubes through which the coolant flows, it becomes possible to readily adjust the degree of cooling the core and also possible to adjust the power transmission capacity.

According to one embodiment of the superconducting cable of the present invention, a bundling band is provided that binds the plurality of coolant tubes together so as to prevent displacement of a twisted state of the coolant tubes.

According to this configuration, since the bundling band holds the twisted state of the coolant tubes, the core can be cooled with reliability.

According to one embodiment of the superconducting cable of the present invention including the bundling band, the plurality of coolant tubes are S-Z twisted around the core. The bundling band has at least one of bundling structures described below.

(A) A bundling structure in which the bundling band binds the plurality of coolant tubes so as to provide a portion starting from an under side of a circumference of a coolant tube C1, extending over an upper side of a circumference of another coolant tube C2 and reaching an under side of a circumference of still another coolant tube C3.

(B) A bundling structure in which the bundling band includes a main bundling band binding the plurality of coolant tubes together along an outer circumference thereof, and a sub-bundling band having a portion starting from an under side of a circumference of a coolant tube C1, put on an upper side of a circumference of the main bundling band extending between coolant tube C1 and a coolant tube C2 adjacent thereto, and reaching an under side of a circumference of coolant tube C2.

(C) A bundling structure in which the bundling band binds a convex inverted portion and a concave inverted portion among inverted portions in which a twisting direction of the S-Z twisted coolant tubes is inverted, such that the convex inverted portion and the concave inverted portion are twisted in mutually opposite directions in a circumference direction of the core toward outside of a bend of the coolant tubes in each inverted portion. The convex inverted portion is formed of the coolant tubes bent in a convex shape, and the concave inverted portion is located adjacent to this convex inverted portion and formed of the coolant tubes bent in a concave shape.

When the coolant tubes are S-Z twisted, the plurality of coolant tubes are configured as a twisted structure in which an S-twisted portion and a Z-twisted portion extend alternately through the inverted portions repeatedly. Accordingly, the twisted coolant tubes are easily untied, which may prevent sufficient cooling of the core. By providing at least one of the bundling structures (A) to (C) described above, it becomes possible to suppress displacement of the twisted state of the plurality of S-Z twisted coolant tubes, thereby being capable of reliably cooling the core.

According to one embodiment of the superconducting cable of the present invention including the bundling band, pressed winding is provided for pressing the coolant tubes from an upper side of a circumference of the bundling band toward the core.

Particularly when the coolant tubes are S-Z twisted, the bundling band contributes to holding of the twisted state. However, even if the S-Z twisted state is not untied, the coolant tubes may be separated from the core, or an envelope circle of the plurality of coolant tubes may not be able to be maintained at the designed circle diameter and the designed shape. These defects can be suppressed by employing the above-mentioned pressed winding.

According to one embodiment of the superconducting cable of the present invention, the coolant tube is a straight tube or a corrugated tube.

According to this configuration, when the coolant tube is formed as a straight tube, the coolant flow path can be configured to have a uniform cross-sectional shape throughout the entire length. Accordingly, as compared with the coolant flow path having a nonuniform cross-sectional shape in the longitudinal direction, even a relatively long superconducting cable allows the coolant to smoothly circulate, and also allows the coolant to circulate with a pump having relatively small output. On the other hand, when the coolant tube is formed as a corrugated tube, the coolant tube can be configured to have flexibility while ensuring an almost uniform cross-sectional shape in its longitudinal direction.

According to one embodiment of the superconducting cable of the present invention, a plurality of the core are twisted. The cores are twisted so as to provide looseness such that shrinkage of each of the cores caused during cooling can be absorbed.

According to this configuration, the plurality of cores are twisted to provide looseness. Accordingly, by tightening of the twisted cores having looseness, the shrinkage caused when cooling the cores can be absorbed, thereby being capable of preventing excessive tension from acting on the superconducting cable.

According to one embodiment of the superconducting cable of the present invention, a vacuum is produced inside the housing tube.

According to this configuration, a vacuum is produced inside the housing tube, thereby allowing the coolant tube and the core to be effectively heat-insulated from outside of the housing tube.

According to one embodiment of the superconducting cable of the present invention, a heat-insulating material with which the housing tube is filled is provided.

According to this configuration, the housing tube is filled with the heat-insulating material, which eliminates the need to produce a vacuum inside the housing tube, thereby being capable of achieving a superconducting cable excellent in installation workability.

According to one embodiment of the superconducting cable of the present invention, an inside housing tube housing the core and disposed inside with respect to the plurality of coolant tubes is provided.

According to this configuration, the inside housing tube can mechanically protect the core housed therein. In particular, when the inside housing tube is configured to have a circular cross section, coolant tubes can be disposed on the outside of the inside housing tube having a cylinder surface even in the case where three cores are twisted. Accordingly, the coolant tubes can be readily arranged.

According to one embodiment of the superconducting cable of the present invention including the inside housing tube, the inside housing tube forms a flow path of an auxiliary coolant with which a space between the inside housing tube and the core is filled.

According to this configuration, by filling the inside housing tube with the auxiliary coolant, the core is directly brought into contact with the coolant, so that the core can be cooled more efficiently while the insulation property of the core can be improved. According to the superconducting cable of the present embodiment, the coolant flowing through the coolant tube is used to cool the auxiliary coolant within the inside housing tube, and the core can be cooled through this auxiliary coolant. In other words, since the core is basically cooled by the coolant within each coolant tube, the amount of the auxiliary coolant may be less than that of the coolant within each coolant tube, and the flow velocity of the auxiliary coolant may be slower than that of the coolant within each coolant tube. In particular, the amount of the auxiliary coolant to be circulated may be relatively small enough to allow monitoring of the cooled state of the core. Therefore, even in the case of a long superconducting cable, the load for circulating the auxiliary coolant is usually relatively small. In particular, in the case where heat generation does not substantially occur in the core as in a direct-current (DC) superconducting cable, there may be a case where the auxiliary coolant does not have to be circulated. Alternatively, when the cooling performance of the core needs to be improved due to occurrence of various unexpected circumstances in circulation of the coolant through each coolant tube, the flow rate of the auxiliary coolant may be raised accordingly.

According to one embodiment of the superconducting cable of the present invention, the superconducting cable is for direct-current power transmission.

In the case of the cable for DC power transmission, heat generation resulting from power transmission does not substantially occur in the core. Accordingly, even if the core is configured so as not to be directly immersed in the coolant, the core can be cooled effectively by the coolant flowing through each coolant tube outside the core. Therefore, the superconducting cable of the present invention is particularly suitable for DC power transmission. The superconducting cable of the present invention can also be utilized for alternating-current (AC) power transmission. In this case, it is preferable that the flow velocity of the coolant is raised or the cross-sectional area of the coolant tube is enlarged such that the generated heat caused by AC loss can be sufficiently cooled, thereby increasing the coolant flow rate per unit time, placing a high heat-conductive material on a portion where each coolant tube comes into contact with the core, and forming each coolant tube to have a cross-sectional shape so as to be brought into surface contact with the outer circumferential surface of the core.

[Method of Installing Superconducting Cable]

A method of installing a superconducting cable of the present invention includes the following steps.
A drum preparing step: preparing a first drum around which a core including a superconducting conductor layer and an insulating layer or an inside housing tube housing one or more cores are/is wound, and a second drum around which a coolant tube is wound that forms a flow path of a coolant for cooing the superconducting conductor layer.
A twisting step: unreeling the core or the inside housing tube from the first drum, unreeling the coolant tube from the second drum, which are collected, and twisting the coolant tube around an outer circumference of the core or the inside housing tube.
A housing tube installing step: installing a housing tube on an installation path.
A pulling-in step: pulling a composite core unit formed of the twisted core and coolant tube into the housing tube installed on the installation path, and housing the composite core unit therein.
According to this method, the core and the housing tube can be prepared separately and assembled at the installation site. Accordingly, the core and the housing tube can be separately shipped from the factory, and thus, both can be manufactured independently, thereby being capable of readily constructing a long superconducting cable line. When a plurality of cores are used, the coolant tube only has to be twisted around the outer circumference of the twisted body of the plurality of cores or the outer circumference of the inside housing tube. Even when a plurality of cores are provided, each core can be wound around the drum which is then transported from the factory to the installation site, or the plurality of cores twisted in advance at the factory can be transported to the installation site. Accordingly, as compared with a three-core integrated superconducting cable, a relatively longer core can be transported in one drum to the installation site. Furthermore, the cores do not have to be twisted at the factory, but the cores can be twisted at the installation site. Accordingly, it becomes possible to fabricate a relatively long single core at the factory, and cut this single core in an appropriate length to achieve a plurality of cores, which can then be transported to the installation site, or possible to transport a relatively long single core fabricated at the factory to the installation site, at which the this long single core can be cut in a prescribed length to thereby achieve a plurality of cores.
According to one embodiment of the method of installing a superconducting cable of the present invention, the method includes the step of: providing a partial heat-insulating layer on an inner circumferential surface of the housing tube corresponding to an installation side for supporting the composite core unit substantially coaxially with the housing tube when the composite core unit is pulled into afterward, housing the composite core unit in the housing tube, and then filling a remaining space within the housing tube with a heat-insulating material.
According to this method, it becomes possible to readily axially align the housing tube and the composite core unit housed therein. The upper side and the lower side of the housing tube is determined when the housing tube is installed on the installation path. Accordingly, in the state where a partial heat-insulating layer is provided in a part of the inner circumferential surface of the housing tube in the circumferential direction, the housing tube only has to be installed such that the side of the housing tube provided with this partial heat-insulating layer is located on the lower side. This partial heat-insulating layer may be configured to have a thickness such that the center of the composite core unit is located at the center of the housing tube when the composite core unit is placed on the partial heat-insulating layer. Alternatively, it may also possible to obtain the center position of the heat resistance at which the heat resistance indicating a heat insulation effect of the superconducting cable becomes uniform in the radial direction within the housing tube, and determine the thickness of the heat-insulating layer such that the center of the composite core unit is located at this center position of the heat resistance. By pulling the composite core unit onto this partial heat-insulating layer, it becomes possible to readily axially align the housing tube and the composite core unit. Then, by filling the remaining spaces of the housing tube and the composite core unit with the heat-insulating material, the heat insulating property can be ensured uniformly throughout the entire circumference of the composite core unit in the state where the composite core unit is axially aligned with the housing tube.

[Superconducting Cable Line]

The superconducting cable line of the present invention includes the superconducting cable of the present invention described above, and further includes at least one of configurations described below.

«Separation Mechanism»

This superconducting cable line includes a separation mechanism in an intermediate portion of the superconducting cable. This separation mechanism includes a partition member, one pull-out portion, the other pull-out portion, and a coupling coolant tube. The partition member partitions an inside of the housing tube into one space and the other space in a longitudinal direction. The one pull-out portion pulls out a coolant tube within the one space to outside of the housing tube. The other pull-out portion pulls out a coolant tube within the other space to outside of the housing tube. The coupling coolant tube couples both of the pull-out portions.

According to this configuration, when the coolant is initially introduced into the coolant tube after construction of the superconducting cable line, the coolant can be supplied to each of the coolant tubes within the spaces partitioned by this separation mechanism. For example, the coupling coolant tube in the separation mechanism is removed from both of the pull-out portions in advance, in which state the coolant is supplied from each pull-out portion to each of the coolant tubes arranged within one space and the other space. When the coolant tube can be filled with the coolant, a coupling coolant tube is attached to both of the pull-out portions, which are thereby rendered in communication with each other. Consequently, the coolant can be circulated through a series of coolant tubes formed of a communicating tube within one space and a communicating tube within the other space.

By using such a separation mechanism, when a coolant tube within one space and a coolant tube within the other space are combined together to form a series of coolant circulating sections, the coolant can be introduced from the intermediate portion of these coolant circulating sections. When introduction of the coolant is started from this separation mechanism, cooling is started from the side adjacent to the separation mechanism. Thus, cooling is started with more delay as being farther away from the separation mechanism. In other words, when the separation mechanism is used, the coolant flow path from the end on the coolant introducing side to the end on the side opposite thereto is shorter than that in the case where the coolant is introduced from one end toward the other end of the above-mentioned coolant circulating sections. Accordingly, accumulation of the shrinkage stress acting on the superconducting cable on the coolant introducing side can be alleviated. Therefore, it becomes possible to prevent excessive tension from acting on the superconducting cable. In particular, when a separation mechanism is provided in the intermediate portion of the coolant circulating sections, the coolant tubes within both spaces separated by the separation mechanism have the same length. Thus, the variations in the shrinkage degrees of the coolant tubes within their respective spaces can readily be further reduced and rendered more uniform. Therefore, it is preferable to employ a superconducting cable having a single core and to absorb shrinkage resulting from cooling by both terminals configured movable and installed at both ends of the superconducting cable line since the movable amounts of both terminals for absorbing shrinkage of the single core can be rendered almost uniform.

Furthermore, it is possible to select coolant tubes having almost uniform cross-sectional shapes in the longitudinal direction. Accordingly, even if shrinkage occurs in each coolant tube due to cooling, a difference in shrinkage degree is less likely to occur between the coolant tube within one space and the coolant tube within the other space. This less-likeliness of causing a difference in the shrinkage degree can be regarded as being sufficiently advantageous, as compared with the conventional superconducting cable line, since the installation path of the superconducting cable has a bent portion, and even when each of the position of this bent portion and its bent manner is different between both spaces separated by the separation mechanism, the cross-sectional shape of the coolant flow path is not dependent on the arrangement of the core within the housing tube.

According to one embodiment of the superconducting cable line of the present invention including the separation mechanism, a vacuum is produced inside the housing tube. This embodiment includes one exhaust tube in communication with one space from outside of the housing tube, the other exhaust tube in communication with the other space from outside of the housing tube, and a communicating tube connecting both of the exhaust tubes.

According to this configuration, a vacuum can be produced inside the housing tube through the separation mechanism. For example, the communicating tube of the separation mechanism is removed from both of the exhaust tubes in advance. In this state, a vacuum can be produced in one space and the other space through each exhaust tube. When a vacuum is produced in each space, the communicating tube is attached to both of the exhaust tubes, thereby bringing both exhaust tubes in communication with each other. Accordingly, it becomes possible to form a series of vacuum spaces in which one space is in communication with the other space.

In this case, when one space and the other space are combined together to form a series of vacuum sections, a vacuum can be produced through the intermediate portion of the vacuum sections. In other words, when the separation mechanism is used, a vacuum can be readily produced for each space partitioned by the partition plate as compared with the case where a vacuum is produced through any of the ends of the vacuum sections throughout its entire length. Accordingly, a relatively smaller vacuum pump can be used and a vacuum can be produced in a relatively shorter period of time. Furthermore, it is preferable that the superconducting cable line can be separated for the purpose of identifying a position where abnormality occurs and repairing the abnormality.

<<Cooling Station: Separate Forward and Return paths>>

The present superconducting cable line includes a superconducting cable of the present invention; and a plurality of cooling stations for circulating a coolant for cooling the superconducting cable along the superconducting cable. The coolant tube included in the superconducting cable includes a coolant tube $\alpha g$ serving as a coolant forward path; a coolant tube $\alpha r$ arranged in parallel to this coolant tube $\alpha g$ and serving as a coolant return path; a coolant tube $\beta g$ serving as another coolant forward path; and a coolant tube $\beta r$ arranged in parallel to coolant tube $\beta g$ and serving as another coolant return path. The cooling stations include cooling stations A1 and A2 connected to both ends, respectively, of each of coolant tube $\alpha g$ and coolant tube $\alpha r$; and cooling stations B1 and B2 connected to both ends, respectively, of each of coolant tube $\beta g$ and coolant tube $\beta r$. Cooling stations A1 and A2 and cooling stations B1 and B2 are provided such that a section where coolant tubes $\alpha g$ and $\alpha r$ are arranged and a section where coolant tubes $\beta g$ and $\beta r$ are arranged are displaced in the longitudinal direction of the superconducting cable.

According to this configuration, since the core and the coolant tube are independently arranged in parallel, the section where the coolant tubes are arranged can be determined regardless of the length of the core between the terminal connection units, or the length of the core between the intermediate connection units. Furthermore, when separate cooling stations are used to supply a coolant to coolant tube $\alpha g$ forming a forward path and to coolant tube $\alpha r$ forming a return path, and similarly supply a coolant to coolant tube $\beta g$ forming a forward path and to coolant tube $\beta r$ forming a return path, the distances between cooling stations A1 and A2 and between cooling stations B1 and B2 can be readily increased. In particular, by arranging cooling stations A1 and A2 and cooling stations B1 and B2 such that the sections where coolant tubes $\alpha g$ and $\alpha r$ are arranged and the sections where coolant tubes $\beta g$ and $\beta r$ are arranged are displaced in the longitudinal direction of the superconducting cable, the core can be cooled throughout its entire length using the remaining cooling stations even when the cooling stations partially become inoperable. This will be described later as a method of operating a superconducting cable line. In addition, the number of each of coolant tubes $\alpha g$, $\alpha r$, $\beta g$, and $\beta r$ only has to be at least one, and one coolant tube or a plurality of coolant tubes may be provided.

<<Cooling Station: Series of Forward-and-Return Paths>>

This superconducting cable line includes a superconducting cable of the present invention; and a plurality of cooling stations for circulating a coolant for cooling this superconducting cable along the superconducting cable. The coolant tube included in the superconducting cable includes a coolant tube $\alpha gr$ forming a series of forward-and-return paths within the housing tube; and a coolant tube $\beta gr$ forming another series of forward-and-return paths within the housing tube. The cooling stations include a cooling station X1 connected to a coolant feed end and a coolant return end of coolant tube $\alpha gr$; and a cooling station Y1 connected to a coolant feed end and a coolant return end of coolant tube $\beta gr$. Then, cooling stations X1 and Y1 are disposed such that a section where coolant tube $\alpha gr$ is arranged and a section where coolant tube $\beta gr$ is arranged are displaced in a longitudinal direction of the superconducting cable.

According to this configuration, since the core and the coolant tube are independently arranged in parallel, the section where the coolant tubes are arranged can be determined regardless of the length of the core between the terminal connection units, or the length of the core between the intermediate connection units. Furthermore, since coolant tube $\alpha gr$ and coolant tube $\beta gr$ form a series of forward-and-return paths, the amount of the coolant flowing through the series of forward-and-return paths can be continuously maintained uniformly automatically by a one pump for feeding the coolant. Accordingly, circulation of the coolant can be readily controlled while reducing the number of pumps. In particular, thanks to cooling stations X1 and Y1 arranged such that the section where coolant tube $\alpha gr$ is arranged and the section where coolant tube $\beta gr$ is arranged are displaced in the longitudinal direction of the superconducting cable, the core can be cooled throughout its entire length using the remaining cooling stations even when some of the cooling stations becomes inoperable. This will be described later as a method of operating the superconducting cable line. In addition, the number of each of coolant tubes $\alpha gr$ and $\beta gr$ only has to be at least one, and one coolant tube or a plurality of coolant tubes may be provided.

<< Power Extracting Unit>>

This superconducting cable line includes a superconducting cable of the present invention; and a plurality of cooling stations for circulating a coolant for cooling this superconducting cable along the superconducting cable. The superconducting conductor layer of the superconducting cable includes an inside conductor layer disposed inside the insulating layer and an outside conductor layer disposed outside the insulating layer. The superconducting cable line further includes a power extracting unit disposed in an intermediate portion of the superconducting cable for supplying electric power to the cooling station. This power extracting unit includes a superconducting inside pull-out conductor, a superconducting outside pull-out conductor, a terminal box, one normal-conducting lead, and the other normal-conducting lead. The superconducting inside pull-out conductor is connected to the inside conductor layer pulled out from the core. The superconducting outside pull-out conductor is connected to the outside conductor layer pulled out from the core. The terminal box is filled with the coolant cooing both of the pull-out conductors. The one normal-conducting lead is connected to the superconducting inside pull-out conductor to form an electric path extending from the terminal box toward a room temperature side. The other normal-conducting lead is connected to the superconducting outside pull-out conductor to form an electric path extending from the terminal box toward the room temperature side. The cooling station is configured to cool the coolant by supplying electric power from the superconducting cable through both of the normal-conducting leads and supply the coolant to each coolant tube.

According to this configuration, when a part of the electric power transmitted to the core is extracted through the power extracting unit to outside of the housing tube, the extracted electric power can be utilized for driving accessory devices such as a cooling station forming a superconducting cable line. In particular, even when the superconducting cable line is installed in a desert, wilderness or the like, and the electric power for driving the cooling station cannot be supplied from near the superconducting cable line, the above-mentioned accessory devices can be driven.

<<Cooling Station for Auxiliary Coolant>>

This superconducting cable line includes a superconducting cable of the present invention having an inside housing tube through which the above-described auxiliary coolant circulates. This superconducting cable line further includes a cooling station for an auxiliary coolant by which an auxiliary coolant introduced into the inside housing tube is caused to circulate slower than the coolant flowing through the coolant tube. This cooling station for an auxiliary coolant also serves as a cooling station (a main cooling station) for supplying a coolant (a main coolant) to the coolant tube.

According to this configuration, the core can be efficiently cooled by using the cooling station for an auxiliary coolant to cause the auxiliary coolant to circulate through the inside housing tube. Since the cooling station for an auxiliary coolant only has to cause the auxiliary coolant to circulate slower than the coolant flowing through the above-mentioned coolant tube, this cooling station for an auxiliary coolant can be reduced in size as compared with the cooling station for circulating the coolant. Furthermore, the distance between the cooling stations for auxiliary coolants can be longer than the distance between the (main) cooling stations for circulating a (main) coolant.

<<Cooling-Adjustment Heat-Insulating Material: Flat Installation Type>>

This superconducting cable line includes a superconducting cable of the present invention, and a plurality of cooling stations for circulating a coolant for cooling this superconducting cable along the superconducting cable. The coolant tube included in this superconducting cable includes a coolant tube $\alpha$g serving as a coolant forward path, and a coolant tube $\alpha$r arranged in parallel to coolant tube $\alpha$g and serving as a coolant return path. The cooling stations include cooling stations A1 and A2 connected to both ends, respectively, of each of coolant tube $\alpha$g and coolant tube $\alpha$r. A cooling-adjustment heat-insulating material covering each of coolant tubes $\alpha$g and $\alpha$r is provided on each of a coolant feed end side of coolant tube $\alpha$g connected to cooling station A1 and a coolant feed end side of coolant tube $\alpha$r connected to cooling station A2.

According to this configuration, when introducing a coolant into a coolant tube, the superconducting cable can be cooled almost uniformly throughout its entire length. Cooling of the superconducting cable starts from the coolant introducing side as described above, and also starts with more delay as being farther away from this coolant introducing side. The cooling-adjustment heat-insulating material is provided at a portion of each of coolant tubes $\alpha$g and $\alpha$r corresponding to this coolant introducing side, thereby alleviating cooling on the coolant introducing side. Thus, the cooling degrees on the coolant introducing side and the side opposite thereto can be rendered uniform. In other words, in order to ensure uniformity of the shrinkage stress caused by cooling of the cable and therefore ensure the soundness of the cable, it is more preferable to start cooling from the center portion of the cable to generate cooling shrinkage stress from the center portion toward a terminal portion gradually as cooling progresses, than to start cooling from the cable terminal influenced by the stress from a terminal unit. The superconducting cable line can be suitably utilized when an installation path is almost flat.

<<Cooling-Adjustment Heat-Insulating Material: Inclined-Installation Type>>

This superconducting cable line includes a superconducting cable of the present invention, and a plurality of cooling stations for circulating a coolant for cooling the superconducting cable along the superconducting cable. The coolant tube included in this superconducting cable includes a coolant tube $\alpha$g serving as a coolant forward path, and a coolant tube $\alpha$r arranged in parallel to this coolant tube $\alpha$g and serving as a coolant return path. The cooling stations include a cooling station A1 disposed at a relatively low position and a cooling station A2 disposed at a relatively high position that are connected to both ends, respectively, of each of coolant tube $\alpha$g and coolant tube $\alpha$r. A cooling-adjustment heat-insulating material covering each of coolant tubes $\alpha$g and $\alpha$r is provided on each of a coolant feed end side of coolant tube $\alpha$g connected to cooling station A1 at the relatively low position and a coolant return end side of coolant tube $\alpha$r connected to cooling station A1 at the relatively low position.

According to this configuration, even when there is a difference in height in the installation path of the superconducting cable and when one cooling station is installed at a relatively low position while the other cooling station is installed at a relatively high position, the cooling shrinkage stress can be controlled almost uniformly throughout the entire length of the superconducting cable when a coolant is introduced into the coolant tube. When there is a difference in height between the installation positions of both cooling stations, gravity acts on the cable. Accordingly, the stress caused by gravity and the cooling shrinkage stress generated during initial cooling are combined together, to increase the downward stress upon the cable, thereby causing the cable or the cable core to significantly move toward a relatively low position. When initial cooling is progressed earlier from the relatively high position of the cable by using this configuration, it becomes possible to alleviate the downward stress concentration which is caused by additional stress by gravity. In other words, the stress generated by initial cooling of the superconducting cable installed on the installation path that is different in height is controlled, thereby paving the way to achieve more excellent uniformity of the cooling stress throughout the entire length of the cable.

<<Slush Nitrogen>>

This superconducting cable line includes a superconducting cable of the present invention, and a plurality of cooling stations for circulating a coolant for cooling this superconducting cable along the superconducting cable. The superconducting cable is a superconducting cable of the present invention described above, and a coolant circulating through the coolant tube is slush nitrogen.

By using slush nitrogen as a coolant, it becomes possible to increase the cooling section length and increase the current carrying capacity.

<<Cooling Determination Means>>

The superconducting cable line includes a superconducting cable of the present invention, and also includes signal transmitting means, signal receiving means and cooling determination means. The signal transmitting means causes an electrical signal to be input from one end side of the superconducting cable line into the superconducting conductor layer. The signal receiving means receives the signal that has been output on the other end side of the superconducting cable. The cooling determination means determines based on a state of the output signal received by the signal receiving means whether the superconducting conductor layer reaches a temperature at which the superconducting conductor layer is brought into a superconducting state throughout an entire length of the line.

In general, when the superconducting conductor layer is not sufficiently cooled, it has a relatively large electrical resistance, and thus, becomes almost an insulator. When the superconducting conductor layer is sufficiently cooled, it is brought into a superconducting state in which the resistance is substantially zero. Accordingly, if the superconducting conductor layer is not sufficiently cooled throughout the entire length of the superconducting cable line when an electrical signal is input into this superconducting conductor layer, the output signal cannot be detected on the other end side of the line. On the other hand, if the superconducting conductor layer can be sufficiently cooled throughout the entire length of the line, the output signal can be detected on the other end side of the line. Accordingly, by using the cooling determination means, it can be determined, for example, based on the level of the output signal (whether the output signal has been received or not) whether or not the superconducting conductor layer reaches a temperature at which the superconducting conductor layer is brought into a superconducting state throughout the entire length of the line. Particularly, in the case of a long-distance superconducting cable line, it is extremely important to reliably detect whether the superconducting conductor layer is sufficiently cooled or not throughout the entire length of the line.

<<Fault-Point Identifying Means>>

This superconducting cable line includes a superconducting cable of the present invention and the signal transmitting means, and also includes reflection signal receiving means and fault-point identifying means. A portion where the superconducting conductor layer is not sufficiently cooled locally in an intermediate portion of the superconducting cable line is assumed as a fault point. The reflection signal receiving means receives a reflection signal of the electrical signal at the fault point on one end side of the superconducting cable line. The fault-point identifying means calculates a position of the fault point based on a transmission rate of each of the electrical signal and the reflection signal, and on a time period from a time when the electrical signal is input by the signal transmitting means until a time when the reflection signal is received by the reflection signal receiving means.

When a fault point exists in the intermediate portion of the superconducting cable line, the superconducting conductor layer is not brought into a superconducting state at this fault point, but becomes almost an insulator having a resistance. Accordingly, this fault point can be regarded as a position where an impedance mismatch occurs. In this case, the electrical signal input from one end side of the line is reflected at the fault point, and transmitted as a reflection signal to one end side of the line that corresponds to an input terminal of the electrical signal. By measuring the time period from the time when the reflection signal is received by the reflection signal receiving means and the electrical signal is input by the signal transmitting means until the time when the reflection signal is received by the reflection signal receiving means, the position of the fault point can be calculated since the transmission rates of the electrical signal and the reflection signal are known. Particularly, in the case of a long-distance superconducting cable line, it is extremely important to reliably detect where a fault point exists.

[Method of Operating Superconducting Cable Line]

The method of operating a superconducting cable line of the present invention is a method of operating a superconducting cable line having one of configurations including a "cooling station: separate forward and return paths" and a "cooling station: a series of forward-and-return paths", as will be described below.

<<Separate Forward and Return Paths>>

This method of operating a superconducting cable line is a method of operating a superconducting cable line having a configuration of a "cooling station: separate forward and return paths". In this superconducting cable line, a plurality of sets of cooling sections of cooling stations A1, A2 and coolant tubes $\alpha g$, $\alpha r$, and a plurality of sets of cooling sections of cooling stations B1, B2 and coolant tubes $\beta g$, $\beta r$ are arranged in a longitudinal direction of the superconducting cable. When one of cooling stations A1, A2 and cooling stations B1, B2 is inoperable, a cooling section corresponding to this inoperable cooling station is cooled using a plurality of operable cooling stations that share cooling of the cooling section adjacent thereto.

According to this operating method, cooling stations A1, A2 and cooling stations B1, B2 are disposed such that a section where coolant tubes $\alpha g$ and $\alpha r$ are arranged and a section where coolant tubes $\beta g$ and $\beta r$ are arranged are displaced in the longitudinal direction of the superconducting cable. Accordingly, even when some of the cooling stations become inoperable, the cooling section corresponding to this inoperable cooling station (un-coolable section) overlaps with a cooling section of another operable cooling section. Therefore, the un-coolable section can be cooled by using this operable cooling station. Consequently, even when some of the cooling stations become inoperable, the superconducting cable line can still be cooled throughout its entire length, thereby allowing implementation of a more reliable superconducting cable line. In the case of the superconducting cable of the present invention including an inside housing tube through which an auxiliary coolant circulates, when some of the cooling stations become inoperable as described above, the un-coolable section can be cooled also by increasing the circulation amount of the auxiliary coolant.

<<Series of Forward-and-Return Paths>>

This method of operating a superconducting cable line is a method of operating a superconducting cable line having a configuration of a "cooling station: a series of forward-and-return paths". In this superconducting cable line, a plurality of sets of cooling sections of cooling station X1 and a plurality of coolant tubes $\alpha gr$ or one coolant tube $\alpha gr$, and a plurality of sets of cooling sections of cooling station Y1 and a plurality of coolant tubes $\beta gr$ or one coolant tube $\beta gr$ are arranged in the longitudinal direction of the superconducting cable. When one of cooling station X1 and cooling station Y1 is inoperable, a cooling section corresponding to the inoperable cooling station is cooled by using a plurality of operable cooling stations that share cooling of the cooling section adjacent thereto.

According to this operating method, cooling stations X1 and Y1 are disposed such that a section where coolant tube $\alpha gr$ is arranged and a section where coolant tube $\beta gr$ is arranged are displaced in the longitudinal direction of the superconducting cable. Accordingly, even when some of the cooling stations become inoperable, the cooling section corresponding to this inoperable cooling station (un-coolable section) overlaps with a cooling section of another operable cooling station. Therefore, the un-coolable section can be cooled by using this operable cooling station. Consequently, even when some of the cooling stations become inoperable, the superconducting cable line can still be cooled throughout its entire length, thereby allowing implementation of a more reliable superconducting cable line. In the case of the superconducting cable of the present invention including an inside housing tube through which an auxiliary coolant circulates, when some of the cooling stations become inoperable as described above, the un-coolable section can be cooled also by increasing the circulation amount of the auxiliary coolant.

ADVANTAGEOUS EFFECTS OF INVENTION

According to the superconducting cable of the present invention, the core and the coolant tube are independently provided, thereby allowing the coolant to smoothly circulate over a long distance. Furthermore, by independently providing the core and the coolant tube, the core and the coolant tube can be readily manufactured. Also, by increasing the production unit length of each of the core and the coolant tube, the production cost can be greatly decreased.

According to the superconducting cable line of the present invention, a long-distance power transmission line can be constructed by using a superconducting cable of the present invention.

According to the method of installing a superconducting cable of the present invention, the superconducting cable of the present invention can be readily installed.

According to the method of operating a superconducting cable of the present invention, even when some of the cooling stations are inoperable, remaining cooling stations are used, thereby being capable of maintaining sufficient cooling throughout the entire length of the superconducting cable.

BRIEF DESCRIPTION OF DRAWINGS

Fig. 1 is a cross-sectional view showing a basic configuration of a superconducting cable of the present invention according to the first embodiment.

Fig. 2 is a schematic perspective view showing the basic configuration of the superconducting cable of the present invention according to the first embodiment.

Fig. 3 is a partial cross-sectional view of a core of the superconducting cable in the first embodiment.

Fig. 4 is an explanatory diagram of a cooling zone of the superconducting cable in the first embodiment.

Fig. 5 is a cross-sectional view showing the superconducting cable of the present invention in the first embodiment in which a vacuum is produced in a housing tube, in the case where four coolant tubes are used.

Fig. 6 is a cross-sectional view showing the superconducting cable of the present invention in the first embodiment in which a vacuum is produced in the housing tube, in the case where three coolant tubes are used.

Fig. 7 is a cross-sectional view showing the superconducting cable of the present invention in the first embodiment in which the housing tube is filled with a heat-insulating material, in the case where four coolant tubes are used.

Fig. 8 is a cross-sectional view showing the superconducting cable of the present invention in the first embodiment in which the housing tube is filled with a heat-insulating material, in the case where three coolant tubes are used.

Fig. 9 is an explanatory top plan view illustrating a method of installing a superconducting cable of the present invention according to the third embodiment.

Fig. 10 is an explanatory front view illustrating the method of installing a superconducting cable of the present invention according to the third embodiment.

Fig. 11 is a schematic configuration diagram of a superconducting cable line of the present invention according to the fourth embodiment.

Fig. 12 is a schematic configuration diagram of a superconducting cable line of the present invention according to the fifth embodiment.

Fig. 13 is a schematic configuration diagram showing a separation mechanism of a superconducting cable line of the present invention according to the sixth embodiment.

Fig. 14 is a schematic configuration diagram showing a power extracting unit of a superconducting cable line of the present invention according to the seventh embodiment.

Fig. 15 is a schematic configuration diagram of a superconducting cable line of the present invention according to the eighth embodiment.

Fig. 16 is a schematic configuration diagram of a superconducting cable line of the present invention according to the ninth embodiment.

Fig. 17 is a schematic configuration diagram of a superconducting cable line of the present invention according to the tenth embodiment.

Fig. 18 is a schematic configuration diagram of a superconducting cable line of the present invention according to the eleventh embodiment.

Fig. 19 is a schematic configuration diagram of a superconducting cable line of the present invention according to the twelfth embodiment.

Fig. 20 is a schematic configuration diagram of a superconducting cable line of the present invention according to the thirteenth embodiment.

Fig. 21 is a schematic configuration diagram of a superconducting cable line of the present invention according to the fourteenth embodiment.

Fig. 22 is a schematic configuration diagram of a modification of the superconducting cable line of the present invention according to the fourteenth embodiment.

Fig. 23 is a schematic configuration diagram of a superconducting cable line of the present invention according to the fifteenth embodiment.

Fig. 24 is an explanatory diagram of the state where a bundling band is attached on a superconducting cable line of the present invention according to each of the sixteenth and seventeenth embodiments.

Fig. 25 is an explanatory diagram of the state where a bundling band is attached on a superconducting cable line of the present invention according to the eighteenth embodiment.

Fig. 26 is a perspective view of a configuration of the conventional superconducting cable.

DESCRIPTION OF EMBODIMENTS

The embodiments of the present invention will be hereinafter described with reference to the accompanying drawings. First, the superconducting cable of the present invention will be described, which will be followed by a method of installing the cable, and a line using the cable. In each figure, the same or corresponding components are designated by the same reference characters.

[First Embodiment: Superconducting Cable]

{Outline}

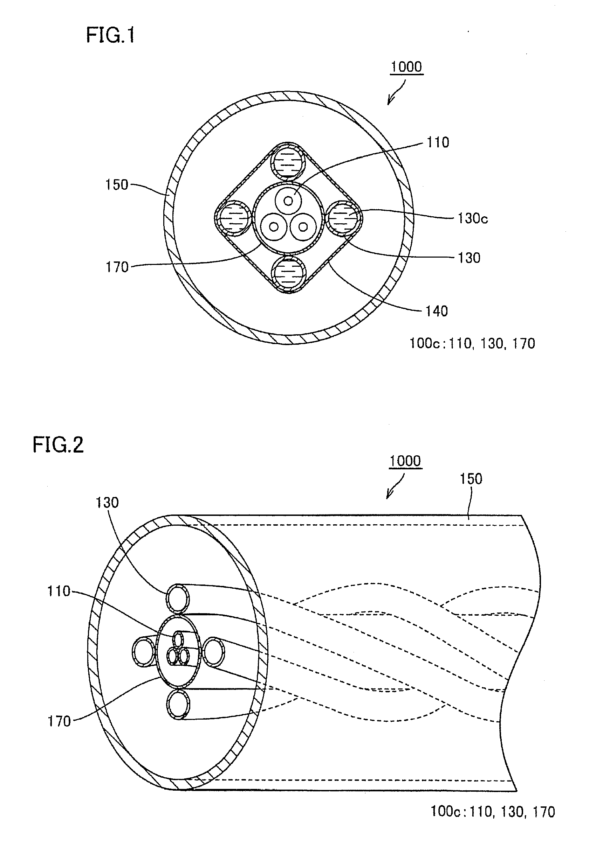

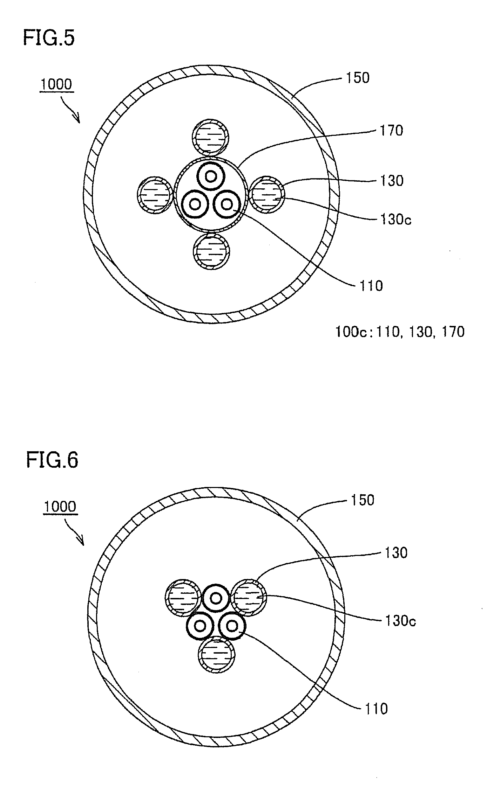

The basic configuration of a superconducting cable of the present invention will be described with reference to Figs. 1 to 4, and modifications thereof will be described with reference to Figs. 5 to 8. This superconducting cable 1000 includes a composite core unit 100c and a housing tube 150 housing this unit 100c. Composite core unit 100c is formed by combining a core 110 and a coolant tube 130, and also includes an inside housing tube 170 as appropriate. Core 110 is cooled by a coolant 130c flowing through coolant tube 130. More specific configuration of this cable 1000 will be described below.

{Configuration}

(Core)

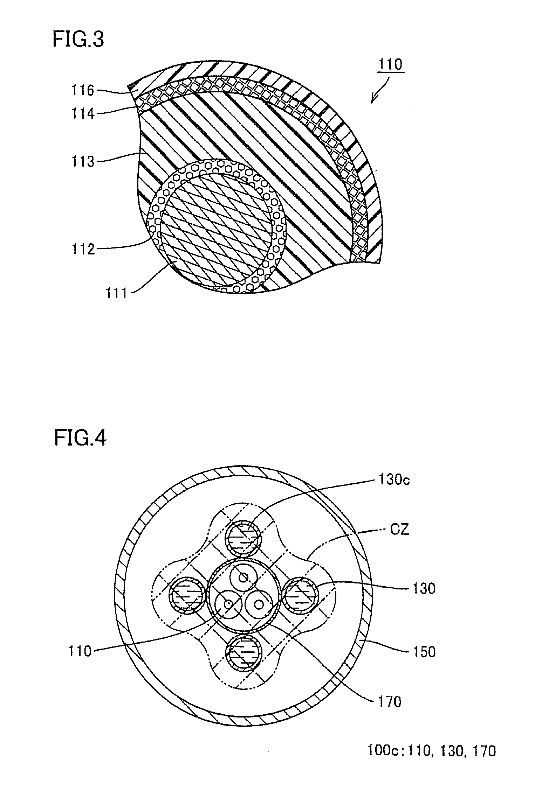

Core 110 includes a former 111, an inside superconducting conductor layer 112, an insulating layer 113, an outside superconducting conductor layer 114, and a protective layer 116 arranged in this order from the center, as shown in Fig. 3. Specifically, inside superconducting conductor layer 112 and outside superconducting conductor layer 114 form a superconducting conductor layer.

<<Former>>

Former 111 retains the shape of inside superconducting conductor layer 112 described below and also functions as a path for diverting an abnormal current. Former 111 may have a twisted wire structure formed by twisting a plurality of wires, and a hollow structure formed by using a metal pipe or a spiral band. In the former case, particularly in the case of alternating-current application, a coated metal wire such as copper wire with insulation coating can be suitably utilized for a wire. Particularly in the case of a direct-current application, a metal wire such as a bare copper wire can also be utilized. In the latter case, a stainless steel tube, an aluminum (alloy) tube and the like can be suitably utilized, and the inside thereof can also be used as a flow path of a coolant. Since an aluminum (alloy) tube is excellent in flexibility, it is expected to be used as a straight pipe. Former 111 may be utilized as a path for diverting an abnormal current. When this abnormal current is relatively small, an insulating material may be applied to former 111. The present example illustrates former 111 having a twisted wire structure formed by twisting coated or uncoated (bare) metal wires. A cushion layer (not shown) may be provided between former 111 and inside superconducting conductor layer 112.

<<Inside Superconducting Conductor Layer>>

Inside superconducting conductor layer 112 forms a power transmission path. As inside superconducting conductor layer 112, for example, a tape-shaped wire material having an oxide superconductor can be suitably utilized. Examples of the tape-shaped wire material that can be utilized may be a Bi2223-based superconducting tape wire and a RE123-based thin film wire material. Examples of the Bi2223-based superconducting tape wire may be a sheath wire in which a filament formed of a Bi2223-based oxide superconductor is arranged in stabilized metal such as Ag-Mn and Ag. Examples of the RE123-based thin film wire material may be a laminated wire material in which an oxide superconducting phase made of a rare-earth element RE such as Y, Ho, Nd, Sm, and Gd is formed on a metal substrate. Examples of inside superconducting conductor layer 112 may be a single-layer structure or a multilayer structure that is formed by winding the above-mentioned tape-shaped wire in a spiral manner. Although simplified in Figs. 1 to 4, inside superconducting conductor layer 112 is formed to have a multilayer structure.

<<Insulating Layer>>

Insulating layer 113 is a layer for ensuring insulation required for the voltage used in inside superconducting conductor layer 112. The material that can be suitably utilized for this insulating layer 113 may be a material achieving a certain performance for a normal-conducting cable and having excellent electrical insulation strength, for example, which may be a composite tape made of insulating paper and a plastic layer, kraft paper, or the like. Examples of the composite tape may be PPLP (a registered trademark of Sumitomo Electric Industries, Ltd.). In the case where such a laminated tape is used for insulation, a composite insulator having a gap impregnated with an insulating liquid can be used. A specific example of the insulating liquid in this case may be liquid nitrogen that is also used as a coolant. Inside housing tube 170 (Figs. 1 and 2) is filled with this liquid nitrogen, with which core 110 is impregnated, thereby achieving insulating layer 113 as a composite insulator formed of an insulating liquid and a tape member. When core 110 is not impregnated with coolant 130c, insulating layer 113 that can be used may be an extrusion layer and the like made of cross-linked polyethylene that has achieved a certain performance in a CV cable not requiring an insulating liquid. When core 110 is immersed in an auxiliary coolant, insulating paper such as a composite tape and kraft paper mentioned above can be suitably utilized for an insulating layer. A semiconducting layer (not shown) that is effective in achieving a stable electrical property is generally provided between this insulating layer 113 and inside superconducting conductor layer 112, and between insulating layer 113 and outside superconducting conductor layer 114.

<<Outside Superconducting Conductor Layer>>

In the case of a DC cable, in monopole power transmission, outside superconducting conductor layer 114 can be utilized as a forward-path conductor layer or a return-path conductor layer obtained by inside superconducting conductor layer 112 and outside superconducting conductor layer 114 forming a current forward path and a current return path. In bipolar power transmission, for example, two-line superconducting cables are used, in each of which each inside superconducting conductor layer 112 can be utilized as a forward-path conductor layer and a return-path conductor layer while each outside superconducting conductor layer 114 can be utilized as a neutral wire. In the case of an AC cable, outside superconducting conductor layer 114 can be utilized as a magnetic shield. This outside superconducting conductor layer 114 is also formed by a superconducting wire material similar to that of inside superconducting conductor layer 112. Although outside superconducting conductor layer 114 is generally provided, it is not indispensable and may be provided as required.

Particularly in DC power transmission, when the inside superconducting conductor layer is used as a current forward path and the outside superconducting conductor layer is used as a current return path, it is important that the current-carrying capacity determined from the cross-sectional area of each conductor layer is set to be equal at both conductor layers, so that a return path current equivalent to a forward path current is caused to flow through the outside superconducting conductor layer.

When the return path conductor is formed by a different cable, or when a return path current is returned to the power supply side through the ground without using the return path conductor, there occurs a space where the magnetic field caused by a forward path current and the magnetic field caused by a return path current do not cancel out each other. Accordingly, an inductance LL is to be produced in the superconducting cable. This inductance LL is increased in proportion to the length of the superconducting cable. In the case of a long superconducting cable, a huge inductance LL is produced. When a conducting current i changes, a transient voltage $\Delta v$ is produced on the cable that is determined by the product of this inductance LL and a change rate (di/dt) of the conducting current per unit time (see the following equation).

$$\Delta v = LL \ (di/dt)$$

Depending on the value of this transient voltage $\Delta v$, there is possibility that devices are damaged, or control cannot be done for continuously changing to a required current.

In this regard, when the outside superconducting conductor layer is disposed on the outside of the insulating layer so as to be in close contact with a portion where an electric potential is zero, and the outside superconducting conductor layer having a current-carrying capacity (cross-sectional area) equivalent to the current-carrying capacity (cross-sectional area) of the inside superconducting conductor layer is used as a return path conductor, it becomes possible to prevent a DC magnetic field from being substantially generated on the outside of the superconducting cable. This is because an equal amount of currents that are different in phase by 180° flows through the inside superconducting conductor layer and the outside superconducting conductor layer, respectively. Consequently, the magnetic fields having the same strength and extending in the mutually opposite directions cancel out each other. Accordingly, it becomes possible to set inductance LL of the cable to be substantially zero, and also possible to set transient voltage $\Delta v$ caused by induction to be substantially zero. Therefore, the switch of the circuit of the superconducting cable can be turned on and off, and the transient state of power transmission can also be sufficiently easily controlled so as to change a conducting current.

<<Protective Layer>>

Protective layer 116 covers the outer circumference of outside superconducting conductor layer 114, and protects outside superconducting conductor layer 114 while ensuring the insulation from housing tube 150. This protective layer 116 can be formed by winding kraft paper or the like. A normal-conducting layer (not shown) may be provided inside this protective layer 116 as in the superconducting cable in Fig. 26. This normal-conducting layer can be utilized as a flow path of an abnormal current.

<<Others>>

The number of cores 110 may be one or may be two or more. Figs. 1 and 2 each show twisted three cores. When a plurality of cores 110 are used, and if an AC cable core is used, this AC cable core can be utilized as a core of a three-phase AC cable; and if a DC cable core is used, a plurality of cores can be connected in parallel to form an electrically integrated core, or one core can be a substitute core when a failure occurs. In another example, any of cores 110 can be used as a forward path of the power transmission path, another core 110 can be used as a return path, or any of cores 110 can be used as a neutral wire.
When a plurality of cores 110 are twisted, it is preferable to twist cores 110 so as to provide looseness enough to allow absorption of shrinkage caused when core 110 is cooled. Even if shrinkage force occurs in the cable core due to the cooling operation after installation of the superconducting cable, the shrinkage corresponding to this shrinkage force is absorbed by the above-mentioned looseness. Consequently, the entire cable cannot shrink even if the core has any length. In this regard, particularly in the case of a long-distance cable line, (1) the shrinkage proportional to the length of the cable line does not appear at its both ends; and (2) when an intermediate connection unit is provided on the cable line, this connection unit can be prevented from moving toward the shrinking direction by the start of cooling. Thereby, it becomes possible to suppress excessive tension from acting on any part of core 110 during the cooling work and the operation of the superconducting cable.
In the case where a single core is used, core 110 is disposed so as to meander within inside housing tube 170 described later, to thereby provide core 110 with looseness enough to allow absorption of shrinkage caused when core 110 is cooled. This is indispensable particularly in the case of a long-distance superconducting cable line.

(Coolant Tube)

A coolant circulates through coolant tube 130, thereby cooling the superconducting conductor layer of core 110 so as to be maintained in the superconducting state. A straight pipe and a corrugated pipe can be suitably used as this coolant tube 130. The straight pipe facilitates smooth circulation of the coolant with relatively small pressure loss while the corrugated pipe causes a relatively large pressure loss as compared with the straight pipe, but is still excellent in flexibility. It is preferable that coolant tube 130 has a cross-sectional shape that is almost uniform in the longitudinal direction. This is for the purpose of causing coolant 130c to smoothly circulate over a long distance. A specific example of the cross-sectional shape may be a circle. If the cross-sectional shape is a circle, an isothermal region can be formed in the outer circumference of coolant tube 130 coaxially with this coolant tube 130.
Coolant tube 130 may be arranged in any manner with respect to core 110 and any number of coolant tubes 130 may be arranged with respect to core 110 as long as coolant tube 130 is disposed along core 110 and core 110 is cooled to a required temperature by the coolant flowing through this coolant tube. For example, the required number of coolant tubes 130 each having a required inner diameter may be twisted around the outer circumference of core 110, or coolant tubes 130 may be longitudinally disposed along core 110. As shown in Fig. 2, when coolant tubes 130 are twisted around the outer circumference of core 110 in one direction, core 110 can be readily cooled throughout its entire circumference. Particularly when three cores 110 are twisted, coolant tubes 130 only have to be disposed so as to fit in a twisted groove of each core 110, which causes an increase in the contact region between coolant tubes 130 and cores 110, thereby being capable of cooling core 110 more efficiently. The inner diameter and the number of coolant tube(s) 130, and the density of arranging coolant tubes 130 on the outside of cable core 110 or inside housing tube 170 may be determined such that core 110 can be sufficiently cooled, depending on how the cooling section length, the coolant flow rate and the outer diameter of housing tube 150 housing coolant tube 130 are designed.
Coolant tubes 130 may be longitudinally disposed along the outer circumference of core 110, or may be twisted around the outer circumference of core 110 in advance at a factory. When coolant tubes 130 are twisted, it becomes possible to apply S-twist or Z-twist by which the coolant tubes are wound around core 110 along its entire length in a spiral manner in one direction. In any case, the winding pitch may be determined in accordance with the section length of the cable, the circulating condition of the coolant, and the like. For example, when core 110 (a circumscribed circle of a core group in the case of a plurality of cores) or inside housing tube 170 exists, the winding pitch may be approximately five to twenty times larger than the outer diameter of inside housing tube 170. Coolant tubes 130 may be twisted around core 110 in an S-Z twisted manner. When coolant tubes 130 are S-twisted or Z-twisted in one direction, an assembly of core 110 and coolant tubes 130 is complicated and increased in size. This is because not only a take-up bobbin of coolant tube 130 needs to be continuously rotated in one direction in this assembly, but also a take-up bobbin is increased in size for using relatively long coolant tubes 130. On the other hand, when a relatively small assembly is used, the lengths of coolant tubes 130 and core 110 that can be mounted in the assembly is limited. Thus, it becomes difficult to fabricate a long composite core unit 100c having coolant tubes 130 twisted around core 110 (also including inside housing tube 170 if it is provided). On the other hand, if coolant tubes 130 are S-Z twisted, each coolant tube 130 is wound in one direction, for example, by approximately three-tenths of a turn to approximately several turns, and subsequently wound in the opposite direction by approximately same number of turns. Then, this S-Z twist is fixed by horizontally winding a tape so as to prevent this S-Z twist from returning, immediately after winding, to the position before conducting S-Z twist. Thus, since this process only has to be repeated after that, it is not necessary to rotate the take-up bobbin itself. Accordingly, long coolant tubes 130 and core 110 are separately wound around large-sized drums, respectively, which are then transported to an installation site and then placed in a stationary manner. Then, coolant tubes 130 and core 110 are unreeled from each drum, thereby being capable of fabricating a long composite core unit 100c. The method of installing a superconducting cable utilizing this method will be described later.

It is preferable that some gap or a cushion member (not shown) is provided between core 110 and each coolant tube 130. By this gap and cushion member, it becomes possible to absorb the shrinkage of the winding diameter caused by heat shrinkage of coolant tubes 130. This cushion member can be formed on the outer circumference of the core or each coolant tube.

An appropriate number of coolant tubes 130 can be selected so as to achieve an optimum design as the necessary condition that core 110 can be sufficiently cooled throughout its entire circumference, and as the required condition on the basis of the cooling section length and the outer diameter of the housing tube. It is generally suitable to employ a plurality of coolant tubes 130 and arrange each coolant tube 130 evenly on the outer circumference of core 110 (if a plurality of cores are used, on the outer circumference of a group of these cores). Figs. 1 and 2 each show four coolant tubes 130. In fact, one double-coolant tube may be used that includes an inside coolant tube housing a core and an outside coolant tube disposed on the outer circumference of this inside coolant tube in a coaxial manner. In this case, the space between the inside coolant tube and the outside coolant tube is used as a coolant flow path.

Examples of the material that can be suitably used for coolant tube 130 may be steel, stainless steel, aluminum (alloy), and the like. Furthermore, a protective outer sheath (not shown) made of plastic or the like may be provided on the outer circumference of each of these metal tubes. When the protective outer sheath is formed of a material excellent in heat insulating property, it becomes possible to cause this protective outer sheath to function as a part of the heat-insulating material described later. The diameter of coolant tube 130 may be selected as appropriate such that the cross-sectional area of the coolant flow path required to sufficiently cool cable core 110 can be ensured on the required conditions of the number of coolant tubes and the cooling section length.

It is preferable that coolant tubes 130 and core 110 are integrated by a bundling band 140 (see Fig. 1, but not shown in Fig. 2). This is because when core 110 and coolant tubes 130 or coolant tubes 30 are positioned in a prescribed arrangement, core 110 can be cooled with stability, so that composite core unit 100c formed of a combination of core 110 and coolant tubes 130 can be readily pulled into a housing tube described later. Particularly when the coolant tubes are S-Z twisted, it is preferable to use the bundling band to suppress that the coolant tubes come apart. The bundling band only has to suppress that the coolant tubes and the core come apart, and a tape member such as a metal tape and a fabric tape can be suitably utilized for this bundling band. In particular, the metal tape is hard to cause looseness due to its strength, and also expected to achieve an effect of uniformly cooling the region surrounded by the bundling band due to its high heat conductivity. A fabric tape may be wound around the metal tape. Such a tape member is used so as to be wound around the outer circumference of coolant tubes 130 twisted around core 110. Although the tape member may be wound in a butt-winding manner or in a lap-winding manner, the tape member may also be wound in a gap-winding manner so as to produce a gap between adjoining turns. This gap serves as a flow path at the time when the heat-insulating material described later is introduced into the housing tube.

(Housing Tube)

Housing tube 150 houses the above-mentioned composite core unit 100c. A straight pipe and a corrugated pipe can be suitably utilized for this housing tube 150. Examples of the material of housing tube 150 may be steel, stainless steel, and the like. It is preferable that housing tube 150 is sized such that composite core unit 100c can be housed therein and also a sufficient heat insulation distance can be ensured between this housing tube 150 and composite core unit 100c. For example, the inner diameter may be approximately 400 mm to 1000 mm. The thickness may be for example approximately 3 mm to 15 mm since the internal pressure is not substantially applied to a steel pipe, housing tube 150 for example buried in the ground only has to have a thickness enough to withstand the earth pressure. On the other hand, in the case where housing tube 150 is a steel pipe installed in the air, the thickness may be 3 mm to 5 mm, for example, while considering the support structure.

According to the conventional superconducting cable, since the pressurized coolant circulates through the inner tube of the heat-insulating tube, hoop stress acts on the inner tube in the circumferential direction as tensile stress. On the other hand, according to the superconducting cable of the present invention, when housing tube 150 is filled with heat-insulating material 160 as described later, housing tube 150 is supported by heat-insulating material 160 from inside, to prevent excessive tensile stress from acting on housing tube 150. When the inside of housing tube 150 is under vacuum, atmospheric pressure acts on the outside of housing tube 150, thereby causing compressive force to act on the housing tube in the circumferential direction. Accordingly, a pipe having a relatively large diameter and a relatively small thickness is to be used as housing tube 150.

The internal space of housing tube 150 is used as space for heat insulation of the composite core unit. This internal space may be under vacuum or may be filled with a heat-insulating material.

Fig. 5 shows an embodiment in which four coolant tubes 130 and inside housing tube 170 described below are used. Fig. 6 shows an embodiment in which three coolant tubes 130 are used and each are arranged in the twisted groove of core 110, and the above-described bundling band is not shown. This composite core unit 100c is disposed approximately coaxially with housing tube 150 by spacers (not shown) arranged at appropriate intervals in the longitudinal direction within housing tube 150. In addition, it is preferable that a heat-insulating layers (not shown) such as Super Insulation (trade name) is formed within the vacuum space in order to suppress incoming radiant heat. When keeping the internal space of housing tube 150 under vacuum, particularly in the case of a DC cable, only the heat incoming from outside of housing tube 150 influences the internal space of housing tube 150, and therefore, the heat coming into coolant tube 130 and core 110 from outside can be most excellently prevented. In this point, the DC cable is effective. If coolant tube 130 forming composite core unit 100c reaches a prescribed coolant temperature (equal to or lower than 77K that is a subcooled temperature of liquid nitrogen) while keeping the internal space of housing tube 150 under vacuum, the temperature of composite core unit 100c spontaneously reaches the temperature of a cooling zone CZ, that is, the coolant temperature of coolant tube 130 (equal to or lower than 77K that is a subcooled temperature of liquid nitrogen), and this temperature is continuously maintained. This is because heat generation substantially does not occur in the envelope circle circumscribing all coolant tubes 130 within cooling zone CZ in Fig. 4, including composite core unit 100c. Accordingly, inside superconductor layer 112 and outside superconducting conductor layer 114 within core 110 are brought into a superconducting state, and superconducting cable 1000 is to function as an intended power transmission function.

However, in the case where the installation construction of the superconducting cable is completed, and circulation of the coolant through coolant tube 130 is started so as to cause composite core unit 100c to reach the same temperature as that of coolant tube 130, cooling of core 110 will take a relatively long period of time if a vacuous gap exists between coolant tube 130 and core 110. This is because coolant tube 130 lowers the temperature of core 110, and therefore, only heat radiation action can be utilized for absorbing the heat flow from core 110. Therefore, it is preferable to utilize the heat-conducting action caused by contact with the object to greatly shorten the time of cooling core 110. Accordingly, it is preferable to bring coolant tube 130 into direct contact with inside housing tube 170 made of metal (Fig. 5) when inside housing tube 170 exists, and preferable to bring coolant tube 130 into direct contact with core 110 (Fig. 6) when the inside housing tube does not exist.

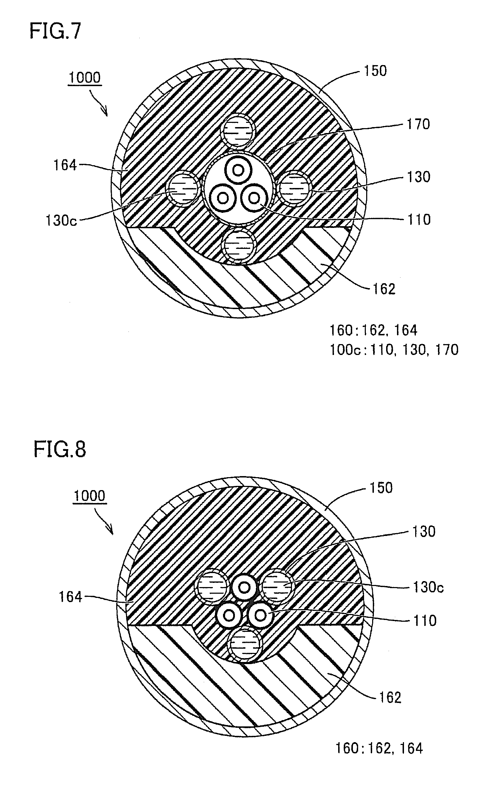

On the other hand, when the internal space is filled with heat-insulating material 160, the material of heat-insulating material 160 should be of course a heat-insulating material having the highest possible heat resistance, and may be preferably such a material in a fluid state that can be introduced reliably into the every corner of the internal space in advance. Specific examples of the material may be a foamed plastic-based material made mainly of raw resins such as polyurethane, polystyrene and polypropylene. Furthermore, it is preferable that heat-insulating material is formed of a partial heat-insulating layer 162 disposed within housing tube 150 in advance before composite core unit 100c is housed within housing tube 150; and a filled heat-insulating portion 164 with which the remaining internal space is filled after composite core unit 100c is housed within housing tube 150. Figs. 7 and 8 each show a superconducting cable including partial heat-insulating layer 162 and filled heat-insulating portion 164. Fig. 7 shows an embodiment in which four coolant tubes 130 and inside housing tube 170 described below are used, and Fig. 8 shows an embodiment in which three coolant tubes 130 each are disposed on the twisted groove of core 110. In each case, the above-described bundling band is not shown. Partial heat-insulating layer 162 is a member made of a heat-insulating material and having an arc-shaped cross section, and disposed in a part of the inner circumferential surface of housing tube 162 in the circumferential direction. Partial heat-insulating layer 162 is configured to have a thickness that allows composite core unit 100c and housing tube 150 to be arranged coaxially with each other when composite core unit 100c is housed within housing tube 150 later. Although it is preferable that the length of partial heat-insulating layer 162 in the axial direction of housing tube 150 continuously extends across the entire length of housing tube 150, partial heat-insulating layer 162 may be, for example, disposed near the connection unit of housing tube 150 at which a welding construction method is expected to be applied or may be disposed discretely at appropriate intervals. If partial heat-insulating layer 162 is continuously disposed across the entire length of housing tube 150, composite core unit 100c can be readily housed in housing tube 150. Although the bundling band mentioned above is not shown in Figs. 7 and 8, it is preferable to use the bundling band in order to firmly stabilize each component of composite core unit 100c to facilitate installation construction. In particular, this bundling band is preferably made of a penetrable material through which a wire-mesh heat-insulating material or the above-mentioned fluid heat-insulating material (for example, a tape member having a large number of holes) penetrates, or preferably configured such that the tap member is wound in a gap-winding manner. According to this configuration, the heat-insulating material can be introduced into the inside of the bundling band, and the entire circumference of composite core unit 100c is surrounded by heat-insulating material 160.

It is preferable to form an anticorrosive layer (not shown) made of polyethylene and the like on the outside of housing tube 150.

(Inside Housing Tube)

Inside housing tube 170 may be disposed between the outer circumference of core 110 (if a plurality of cores 110 are provided, on the outer circumferences of a group of these cores) and each coolant tube 130, as required. Inside housing tube 170 houses core 110, thereby mechanically protecting core 110. In the case where the number of cores 110 to be housed is two or more, and assuming that inside housing tube 170 is a straight pipe having a circular cross section, the surface of inside housing tube 170 on which coolant tube 130 is disposed is configured as a cylindrical surface, thereby allowing coolant tube 130 to be readily wound. Furthermore, when inside housing tube 170 is employed and the inside of housing tube 150 is vacuated, a vacuum only has to be produced between housing tube 150 and inside housing tubes 170. Accordingly, it becomes possible to reduce the load of vacuuming as compared with the case where inside housing tube 170 is not used.

A straight pipe or a corrugated pipe can be used for inside housing tube 170. The suitably applicable cross-sectional shape of inside housing tube 170 may be a circle. The inner diameter of the inside housing tube can be selected as appropriate depending on the size and the number of cores 110 to be housed. Examples of the material of inside housing tube 170 may be stainless steel, aluminum (alloy) and the like. When the liquid does not circulate through inside housing tube 170, it is preferable that the size of the gap between inside housing tube 170 and core 110 is minimized. Accordingly, core 110 can be efficiently cooled.

It is preferable that the space between inside housing tube 170 and core 110 is filled with the substance turning into gas or liquid at the coolant temperature within coolant tube 130. Since such liquid and gas serve as a heat conducting substance existing between core 110 and the coolant within the coolant tube, core 110 can be efficiently cooled. When liquid nitrogen is used as a coolant within coolant tube 130, examples of the gas with which inside housing tube 170 is filled may be hydrogen, helium and the like that are not liquefied at the liquefying temperature of nitrogen (-195.8 °C). It may also be conceivable to introduce oxygen (whose liquefying temperature is -182.96 °C) or dry air that is already liquefied at the liquefying temperature of nitrogen. In this case, when core 110 is cooled at a liquid nitrogen temperature, gas is to be liquefied and solidified within inside housing tube 170, in which case the phenomenon becomes slightly complicated. It may however be also conceivable to utilize the heat conduction effect obtained by such phenomenon for cooling core 110. Examples of the liquid introduced into inside housing tube 170 may be liquid nitrogen.

When inside housing tube 170 is filled with a liquid, this liquid can be utilized as an auxiliary coolant. By using the auxiliary coolant, core 110 is immersed in the auxiliary coolant and thereby more efficiently cooled. However, core 110 may be cooled basically by the coolant circulating through coolant tube 130, and the auxiliary coolant only has to have a function of facilitating cooling of core 110 by the above-mentioned coolant. Accordingly, the auxiliary coolant may be less in amount than the coolant within coolant tube 130, and may be less in flow velocity than the coolant within coolant tube 130. According to this, even if the superconducting cable is relatively long, the load for circulating the auxiliary coolant is small. For the purpose of circulating the auxiliary coolant, a cooling station (not shown) for circulating the coolant through coolant tube 130 may also be used, or a cooling station for circulating the auxiliary coolant may also be separately provided. In any case, since circulation of the coolant and circulation of the auxiliary coolant through coolant tubes 130 are independently carries out, the flow rate of the auxiliary coolant can be independently controlled. By monitoring the temperature of this circulating auxiliary coolant by the terminal of the superconducting cable, the soundness of the temperature distribution of core 110 (superconducting conductor layer) can also be evaluated. Particularly in the case of a DC cable, core 110 does not substantially suffer a loss and heat generation also does not substantially occur. Accordingly, there may be a case where the auxiliary coolant only has to be introduced into inside housing tube 170 without being circulated. Furthermore, when the cooling function of the core is decreased or deteriorated due to a failure occurring in any of the cooling stations or in coolant tube 130 of any of the cooling sections, it becomes possible to conduct control so as to increase the flow rate of this auxiliary coolant such that the function of the superconducting cable line is maintained normally.

The auxiliary coolant that is suitably applicable may be those equivalent to the coolant within coolant tube 130. Specifically, liquid nitrogen may be used. When liquid hydrogen or liquid helium is used as the coolant within coolant tube 130, the auxiliary coolant may also be liquid hydrogen or liquid helium.

A cushion member or an anticorrosive layer (each not shown) may be provided on the outside of inside housing tube 170. These can contribute to absorption of the shrinkage of the winding diameter caused by heat shrinkage of coolant tube 130.

{Functions and Effects}

According to the superconducting cable described above, the following effects can be achieved.

(1) By arranging coolant tubes 130 in parallel to core 110 or inside housing tube 170, cooling zone CZ can be formed near coolant tubes 130 as shown in Fig. 4. This cooling zone CZ is kept in the temperature range to the extent that the superconducting conductor layer can be maintained in the superconducting state, as shown in a region surrounded by a chain double-dashed line. For example, liquid nitrogen liquefied at 77K only has to be circulated through coolant tube 130 by using supercooled liquid nitrogen of 77K or lower such that this cooling zone CZ is set at less than 77K. In particular, when core 110 is surrounded by a plurality of coolant tubes 130, at least the entire region surrounded by a circumscribed circle including all coolant tubes 130 can be used as cooling zone CZ, thereby being capable of effectively cooling core 110. Particularly in the case of a DC cable, heat generation does not substantially occur in core 110 itself. Accordingly, even if direct cooling is not performed by liquid nitrogen of the core itself, core 110 can be maintained by separately arranged coolant tubes 130 at a cooling temperature required for bringing about a superconducting state. In addition, also in the case of an AC cable, the parameters related to cooling characteristics, for example, the cross-sectional area of coolant tube 130, the number and the arrangement distance of coolant tubes 130, the coolant flow rate, and the like are adjusted such that the generated heat caused by AC loss can be cooled. Consequently, it becomes possible to maintain the temperature required in the cooling zone.

(2) By arranging coolant tubes 130 independent of inside housing tube 170 in parallel to core 110, the cross-sectional shape of coolant tube 130 can be arbitrarily selected. Accordingly, the cross-sectional shape of the coolant flow path can also be arbitrarily determined. In other words, the cross-sectional shape of the coolant flow path can be uniformly determined, usually regardless of the cross-sectional shape of the space between twisted core 110 and inside housing tube 170, the change and the uneven distribution of the position of core 110 in the cable length direction within inside housing tube 170 as seen in the cross section of the cable. Accordingly, by selecting a line having an almost uniform cross-sectional shape in its longitudinal direction as a coolant tube 130, the circulation resistance of the coolant can be greatly reduced and a large-capacity coolant can be circulated smoothly. Thus, a long superconducting cable line having a greatly extended cooling section length can be configured. For example, it is expected that an ultra-long superconducting cable line having a long-distance cooling section of 10 km or more, and further 50 km or more, can be constructed.

(3) If a vacuum is produced within housing tube 150, relatively high heat insulation properties can be achieved. Also in that case, housing tube 150 itself forming a vacuum space does not necessarily form a coolant flow path, but the coolant flow path is separately formed by coolant tube 130. Accordingly, it is not necessary to associate the unit section length to be vacuated with the unit section length of the coolant flow path for conducting the cable manufacturing and installing operations. Therefore, a long superconducting cable can be manufactured.

On the other hand, it is greatly difficult to produce a vacuum within housing tube 150 across its length to provide and maintain a vacuum state. This is because it is difficult to prevent vacuum deterioration across the long tube caused by: (1) vacuum leakage; (2) the adsorbed moisture on the inner surface of housing tube 150 caused by insufficient dry and the like; (3) outgassing from housing tube 150 itself; and the like. Particularly, after vacuum lock, when any unexpected situation occurs in a portion of housing tube 150, this unexpected situation directly leads to vacuum deterioration throughout the entire length of housing tube 150. Accordingly, it is extremely difficult to maintain the vacuum state. Therefore, in terms of construction of a superconducting power cable line and maintenance of its performance, a relatively long line makes it extremely difficult to maintain a vacuum in proportion to its length. According to the superconducting cable of the present invention, by dramatically increasing the circulation amount of the coolant as compared with the conventional cable, it becomes possible to increase the cooling capacity of the coolant by coolant tube 130. Accordingly, heat insulation of the composite core unit can be ensured without having to use the vacuum heat-insulation structure. For example, instead of vacuum heat-insulation of the inside of housing tube 150, the space within housing tube 150 is filled with heat-insulating material 160 having the highest possible heat resistance, and also, heat-insulating material 160 is formed to have a relatively large thickness. By taking such measures, it becomes possible to achieve the heat insulation properties by which cooling required for composite core unit 100c can be sufficiently maintained. Accordingly, the vacuum heat-insulation structure having various problems as described above can be eliminated.

(4) When housing tube 150 is filled with heat-insulating material 160, it is not necessary to use vacuum heat-insulation for the heat-insulation structure of composite core unit 100c. Accordingly, it becomes unnecessary to take into consideration of a vacuuming operation at an installation site. Thus, lines can be separately constructed, so that it can be expected to finish the installation operation in a shorter period of time. Also, it becomes possible to omit the operation for collectively producing a vacuum in lines after construction that will take a relatively long period of time. Consequently, a superconducting cable line can be constructed extremely easily and at significantly low cost. Furthermore, it also becomes possible to prevent an accident and the like occurring during the operation from exerting an influence over a wide range, thereby allowing easy recovery from the accident.

(5) By twisting a plurality of coolant tubes 130 around the outer circumference of core 110 in one direction, or by S-Z twisting coolant tubes 130 in alternating directions, the position of coolant tubes 130 can be distributed averagely uniformly throughout the entire length and the entire circumference of core 110. Accordingly, core 110 can be cooled almost uniformly while the states of the coolants within the plurality of cooling tubes 130 can be rendered averagely uniform. Furthermore, by twisting a plurality of cores 110 so as to provide looseness, the cooling shrinkage of core 110 can be absorbed at each position of the cable. Accordingly, it may be less likely that the lengthened superconducting cable line causes a significant increase in accumulation of the cooling shrinkage, or that cooling shrinkage is concentrated on or unevenly distributed to a bend or a saddle portion of the superconducting cable line.

(6) Inside housing tube 170 is used and filled with an auxiliary coolant, thereby being capable of cooling core 110 more efficiently. Even when the auxiliary coolant is caused to circulate, core 110 is cooled by the coolant within coolant tube 130. Accordingly, the auxiliary coolant can be less in amount than the coolant within coolant tube 130, and can be circulated slower than the coolant within coolant tube 130. The circulation load of the auxiliary coolant can be reduced accordingly. Furthermore, there is also provided with means for improving the reliability and the stability of the entire superconducting cable line by making a design such that the cooling performance of the auxiliary coolant can be increased so as to compensate for the decreased cooling performance caused when a failure occurs somewhere in devices related to coolant tube 130.

(7) The inner core portion can be fabricated in the state where it is separated from coolant tube 130 and core 110 or inside housing tube 170. Thus, it becomes possible to significantly improve the productivity by significantly increasing mass production, shortening the production period and improving the yield, and also possible to significantly increase the production unit length at the factory. Accordingly, the possibility of constructing a long superconducting cable line can be more greatly raised by both of reduction in the manufacturing cost and increase in production volume of the cable.

{Study about Advantage of Coolant Tube Having Cross-Sectional Shape that is Uniform in Longitudinal direction}

The following is a more detailed review about the advantage that the coolant tube configured as a straight pipe having a circular cross section allows smooth circulation of the coolant. Assuming that the resistance at the time when a fluid flows through a flow path is R, the differential pressure of the fluid between the inlet and the outlet is P, and the flow rate of the fluid flowing through the flow path is Q, flow rate Q is expressed by the following equation.

$$Q = P/R \ ... \ \text{Equation 1}$$

In this case, flow rate Q should be set at a value at which the cooling performance capable of preventing the coolant from vaporizing from a liquid can be ensured such that the superconducting conductor can be stably maintained in the superconducting state against any heat generation or incoming heat in the superconducting cable.

Differential pressure P cannot be increased to a fixed value or more that is spontaneously determined by the pressure resistance of the line forming a flow path of the fluid and the performance of the pump (cooling station) pumping the fluid.

Resistance R is proportional to a cooling section length L of the superconducting cable, and greatly related to the cross-sectional shape and the size of the flow path. For example, when the core having a circular cross section is housed within the line having a circular cross section, it is assumed that the cross-sectional area of the space between the line and the core is S and the equivalent circle radius of this cross-sectional area S is r. When R is expressed using these r and L described above, the following equation is obtained, in which K is a constant coefficient and n is an exponent.

$$R = K \, (L/r^n) \ldots \text{Equation 2}$$

On the other hand, assuming that the above-described cross-sectional area is S, equivalent circle radius r is expressed by the following equation.

$$r = (S/n)^{1/2} \ldots \text{Equation 3}$$

Therefore, Q in Equation 1 is expressed by the following equation.

$$Q = P/K \bullet (L/r^n) = r^n \bullet P/(K \bullet L) \ldots \text{Equation 4}$$

When L is calculated by Equation 4, the following equation is obtained.

$$L = r^n \bullet P/(K \bullet Q) \ldots \text{Equation 5}$$

In this case, K is a constant value, P is a value at which a practical upper limit value is roughly determined, and Q is a numerical value at a minimum value that is required for maintaining the superconducting conductor in a superconducting state by removing the generated heat and incoming heat of the superconducting cable. Therefore, $r^n$ contributes most greatly to increasing the cooling section length L and reducing the number of cooling stations. By increasing $r^n$, cooling section length L can be increased. In order to increase $r^n$, the cross-sectional area of the coolant flow path only has to be increased. For this purpose, it is also useful to increase the number of coolant tubes 130 as in the invention of the present application, but it is necessary to increase $r^n$ per coolant tube in order to allow an increase in the length of each coolant tube. In this case, exponent n is represented by n = 2 which relates to the area ratio, in the case of a straight pipe having a hollow formed by a smooth inner wall and having a circular cross section, in which turbulence of the fluid is not so significant.

In the conventional cable having three twisted cores housed in the corrugated pipe, the cross-sectional shape of the space between the corrugated pipe serving as a coolant flow path and the three cores is primarily complicated, and these three cores are also unevenly distributed within the corrugated pipe. In this case, n is decreased from 2, and cooling section length L suddenly becomes too short to obtain required flow rate Q. Therefore, it is found that, in order to increase cooling section length L, it is necessary to increase radius r of the straight pipe having a circular cross section and increase $r^n$ on the condition that $n \approx 2$.

Furthermore, it is known that the fluid moving through the long pipe in laminar flow forms an immobile region on the inner wall of the pipe. In consideration of this effect, it is known that exponent n is also increased to n = 2 to 3. Specifically, when radius r of the pipe is increased, the effect of the immobile region is decreased. Accordingly, the fluid can dramatically easily flow, so that exponent n may be extended approximately to $n \approx 3$. Also from this point, it can be found that a straight pipe having a circular cross section is effective in increasing cooling section length L.

Based on the above-described study, it is expected that the distance between the cooling stations can be extended approximately to 50 km to 200 km. In this case, the number of cooling stations can be 21 to 6, for example, for a 1000-km power transmission line.

[Second Embodiment: Superconducting Cable; Slush Nitrogen]

Hereinafter described will be the superconducting cable according to the embodiment in which slush nitrogen is used for the coolant within coolant tube 130. The configuration of this superconducting cable is identical to that in the first embodiment except for the point that the coolant within coolant tube 130 is slush nitrogen. The following descriptions will be made mainly with regard to the difference from the first embodiment.

Slush nitrogen is nitrogen in a solid-liquid mixed state in which many microscopic solid-phase particles are dispersed in liquid nitrogen at a temperature slightly lower than the freezing point of nitrogen (about 63K).

According to the superconducting cable of the present invention, coolant tube 130 serving as a coolant flow path of slush nitrogen has a cross-sectional shape that is almost uniform in the longitudinal direction, and there is also a wide range of choice for its aperture. Accordingly, even when solid-phase particles in slush nitrogen are relatively coarse, no problem occurs in circulation of the coolant. When an attempt is made to apply slush nitrogen to the conventional superconducting cable, it is considered that, in order to ensure smooth circulation of the coolant, solid-phase particles in slush nitrogen should be fine particulates having an average particle diameter of about less than 100 μm, and that the content of the solid-phase particles with respect to the entire slush nitrogen should be equal to or less than about 10% in mass %. This is because, in the conventional superconducting cable, the coolant flow path has a cross-sectional shape that is complicated and not uniform in the longitudinal direction, and also, the coolant should permeate through the insulating layer and reach the superconducting conductor layer. On the other hand, in the superconducting cable of the present example, coarse particles whose average particle diameter is in several-millimeter order, for example, about 3 mm or less, can be utilized as solid-phase particles. Also, even if the content of the solid-phase particles with respect to the entire slush nitrogen is set to exceed 10 % in mass%, for example, set at about 30% or less in mass%, it can be expected that uneven distribution or retention of the solid-phase particles can be avoided. In particular, since core 110 does not need to be immersed in the coolant, the coolant also does not need to permeate through the insulating layer.

The following effect can be achieved by using slush nitrogen as a coolant. Slush nitrogen contains solid-phase particles that are greater in heat capacity than liquid nitrogen. In addition, even if slush nitrogen absorbs the heat quantity corresponding to latent heat of melting by which the solid-phase particles are liquefied, the coolant can be maintained at a fixed temperature (for example, 63K) during this time period. Therefore, since the coolant can be maintained at a fixed temperature for a relatively long period of time with respect to the fixed heat quantity absorbed by the coolant, the unit section length of the coolant flow path can be defined relatively long as compared with the case where liquid nitrogen is used. Furthermore, when using liquid nitrogen that vaporizes at equal to or higher than 77K set as a liquefying point, for example, the liquid nitrogen temperature at a refrigerator outlet and at a superconducting cable inlet is assumed to be TT (K), and the allowable temperature difference of the coolant for maintaining the superconducting state is assumed to be ΔT (K), which leads to a condition that ΔT = 77 - TT. In this case, when TT is lowered to a limit point near 63K that is a freezing point, ΔT can be maximized. Accordingly, also by these effects, it becomes possible to construct a long-distance superconducting cable line having an increased cooling section length.

The coolant containing slush nitrogen is lower in temperature than liquid nitrogen. The allowable current of the superconducting wire material (which will be also referred to as a critical current) is generally increased as the temperature becomes lower. Therefore, for example, in the case of a Bi2223-based superconducting wire material, slush nitrogen of about 63K is used, thereby being capable of ensuring the power transmission capacity twice as much as that in the case where liquid nitrogen of about 77K is used.

[Third Embodiment: Method of Installing Superconducting Cable]

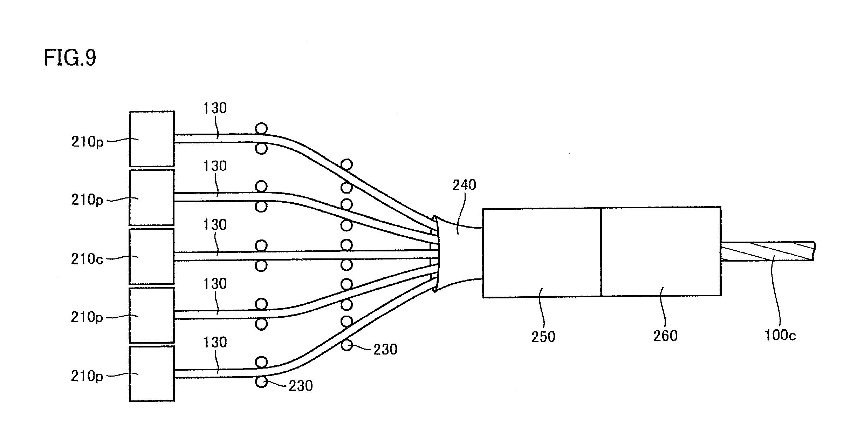

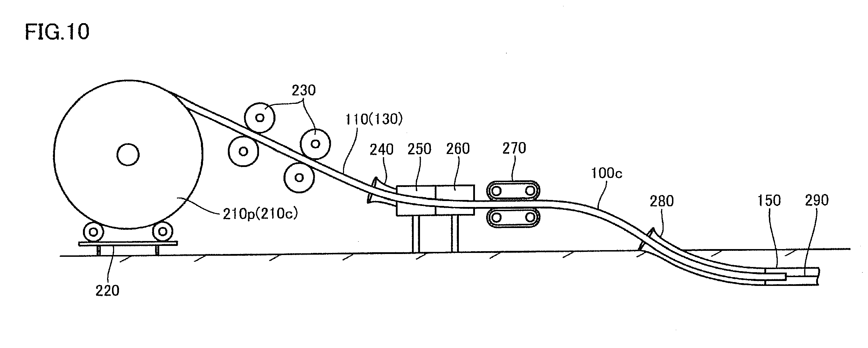

Then, the method of installing a superconducting cable described above will be hereinafter described with reference to Figs. 9 and 10. The members described in the first and second embodiments can be utilized for each component member of the superconducting cable. There may be a method by which the required number of cores 110 are twisted in one direction, and twisted cores 110 or inside housing tube 170 disposed outside thereof and a plurality of coolant tubes 130 are twisted in one direction, both of which are conducted at a factory in advance; composite core unit 100c is obtained in advance at the factory, and wound around the drum, which is then transported to a installation site and installed as it is. According to this method, however, production of a superconducting cable becomes complicated, and the unit length of the superconducting cable to be shipped is shortened. Thus, hereinafter described will be a method implemented by taking advantage of the characteristics of the superconducting cable of the present invention, by which twisting is conducted at an installation site and, immediately after that, composite core unit 100c is directly installed in tandem.

{Outline}

The method of the present example will be described, by way of example, by referring to the case where four coolant tubes 130 are S-Z twisted around the outer circumference of one core 110 at an installation site of the superconducting cable, to produce composite core unit 100c, which is then pulled into the ground or into housing tube 150 installed in the underground hollow channel. More specifically, the method includes a drum preparing step, a twisting step, a housing tube installing step, and a pulling-in step. Of course, in the case where a plurality cores such as three cores are used, the coolant tubes only have to be twisted around the outer circumference of the core group that is an integrated body of a plurality of cores having been twisted at a factory. Furthermore, in the case where inside housing tubes 170 (Figs. 1, 2 and the like) covering the cores (core group) is used, the coolant tubes only have to be twisted around the outside of inside housing tube 170 housing the cores (core group).

{Configuration}

(Drum Preparing Step)

The drum preparing step includes the step of preparing a first drum 210c around which a single core 110 or a plurality of cores 110 or inside housing tube 170 is/are wound; and a second drum 210p around which coolant tube 130 is wound. Since core 110 or inside housing tube 170 and coolant tube 130 can be prepared by being separately wound around first drum 210c and second drum 210p, respectively, long core 110 or inside housing tube 170 and coolant tube 130 can be wound around large-sized drums 210c and 210p, respectively. In terms of statutes such as restriction of shipping service or the Road Traffic Act, it is desirable that the size of each of drums 210c and 210p is set at the transportable maximum size since this allows collective installation of long members.

Core 110 or inside housing tube 170 and coolant tube 130 may be produced to have a length in accordance with the winding length of drums 210c and 210p, respectively, and wound around their respective drums 210c and 210p at a factory. However, long members may be produced at the factory, and cut in length in accordance with their respective drums 210c and 210p, and then wound around the drums. By cutting the long members to produce core 110 or inside housing tube 170 and coolant tube 130, it becomes possible to produce a superconducting cable more efficiently.

Drums 210c and 210p each are transported from the factory to an installation site, and arranged on an under roller 220 at the installation site. Then, first drum 210c is disposed at the center, and a pair of second drums 210p are arranged in parallel on both sides of first drum 210c.

(Twisting Step)

In the twisting step, core 110 or inside housing tube 170 is unreeled from first drum 210c; each coolant tube 130 is unreeled from second drum 210p; and coolant tube 130 is S-Z twisted around the outer circumference of core 110 to produce composite core unit 100c.

Core 110 or inside housing tube 170 and coolant tube 130 that are unreeled from first drum 210c and second drum 210p, respectively, are collected by a multi-stage collectively-rotating guide roller 230, pass through a trumpet-shaped guiding tube 240, and then, introduced sequentially into an S-Z twisting machine 250 and a tape winding machine 260. Trumpet-shaped guiding tube 240 collects core 110 or inside housing tube 170 and coolant tube 130 together, and guides them to S-Z twisting machine 250. S-Z twisting machine 250 serves to S-Z twist coolant tube 130 around the outer circumference of core 110 or inside housing tube 170. In this case, coolant tube 130 only has to be repeatedly wound in one direction by three-tenths of a turn to several turns and then wound in the opposite direction by approximately the same number of turns. Accordingly, relatively small-sized S-Z twisting machine 250 can be used as compared with the above-described collecting machine. Since composite core unit 100c is installed as it is within housing tube 150 and does not undergo bending of a small diameter, the pitch of this twisting turns may be set significantly large, for example, set 50 times to 100 times as large as the outer diameter of core 110 or inside housing tube 170.

S-Z twisting machine 250 twists coolant tubes 130 around core 110 or inside housing tube 170 and combining them together by rotating, at a prescribed angle in forward and backward directions, a rotation dice (not shown) or a panel strip having a plurality of through holes (not shown) and multi-stage collectively-rotating guide roller 230, through which each of core 110 or inside housing tube 170 and coolant tube 130 is inserted. At this time, coolant tube 130 on the drum 210p side is twisted in the direction opposite to the twisting direction of the S-Z twisting machine. Therefore, multi-stage guide roller 230 rotates in the backward direction to greatly loosen this twist toward drum 210p, thereby making adjustment so as to prevent local excessive bending from occurring in any portion of coolant tube 130. The number of stages of this multi-stage rotating guide roller group, the distance between the rollers, and the length between drum 210p and S-Z twisting machine 250 may be determined so as to be suitable to the number of S-Z twisting turns and the pitch length.

Then, tape winding machine 260 is used to form bundling band 140 by winding the tape member around the outer circumference of coolant tube 130 twisted around core 110 or inside housing tube 170, so as to prevent coolant tube 130 from coming apart form core 110 or inside housing tube 170. By passing through this tape winding machine 250, composite core unit 100c is formed.

When the installation site cannot provide a relatively large space where a group of the above-described drums 210c and 210p, collectively-rotating guide roller 230 and S-Z twisting machine 250 are developed, coolant tube 130 only has to be simply longitudinally disposed along core 110 or inside housing tube 170, which is then fixed by bundling band 140 attached to tape winding machine 260, to form composite core unit 100c, which is then introduced as it is into housing tube 150.

In addition, there may be an applicable method by which coolant tube 130 is linearly unreeled for example by a fixed distance such as 500 m, and the supply position of coolant tube 130 is displaced by one fixed distance in a fixed direction to the position of the adjacent coolant tube 130 each time coolant tube 130 is unreeled by one fixed distance, thereby displacing the arrangement position of cooling tube 130 with respect to core 110 or inside housing tube 170. The supply position may be displaced by rotating the above-mentioned panel strip and the like. When the supply position of coolant tube 130 is greatly displaced, a plurality of coolant tubes 130 are twisted between the supply position and second drum 210p. Accordingly, when this displacement of the supply position of coolant tube 130 becomes too large to unreel coolant tube 130 from second drum 210p, coolant tube 130 only has to be cut and joined again to coolant tube 130 that is unreeled from drum 210p located at the position where this displacement is cancelled.

The reason why various methods of twisting coolant tubes 130 around core 110 or inside housing tube 170 described herein can be employed at an installation site is because it becomes possible to take advantage of the characteristics of the superconducting cable of the present invention by which coolant tube 130 can be separated from core 110 or inside housing tube 170.

(Housing Tube Installing Step)

In the housing tube installing step, housing tube 150 is installed on a prescribed installation path such as in the underground or within a hollow channel in the underground. The housing tube installing step may be performed in parallel to the above-described preparing step, or may be performed after the preparing step. When performing the twisting step, housing tube 150 only has to be disposed in a prescribed installation path. A guide wire 290 used in the subsequent pulling-in step is inserted through the installed housing tube 150.

(Pulling-in Step)

In the pulling-in step, composite core unit 100c produced in the twisting step is pulled into housing tube 150 installed in the underground or in the hollow channel. One end of the above-described guide wire 290 is connected to the end of composite core unit 100c produced in the twisting step. By pulling the other end of this guide wire 290, composite core unit 100c is pulled into housing tube 150. At this time, a caterpillar feeder 270 is disposed downstream of tape winding machine 260 for unreeling composite core unit 100c toward housing tube 150. An appropriate guide tube 280 is disposed from the ground to an opening of one end of housing tube 150, for guiding composite core unit 100c to housing tube 150.

{Functions and Effects}

According to this installation method, long core 110 and coolant tube 130 are wound around large-sized drums 210c and 210p, respectively, then sequentially unreeled from drums 210c and 210p, respectively, and combined together, thereby being capable of installing a long superconducting cable within the hollow channel.

[Fourth Embodiment: Superconducting Cable Line; Separate Forward and Return Paths]

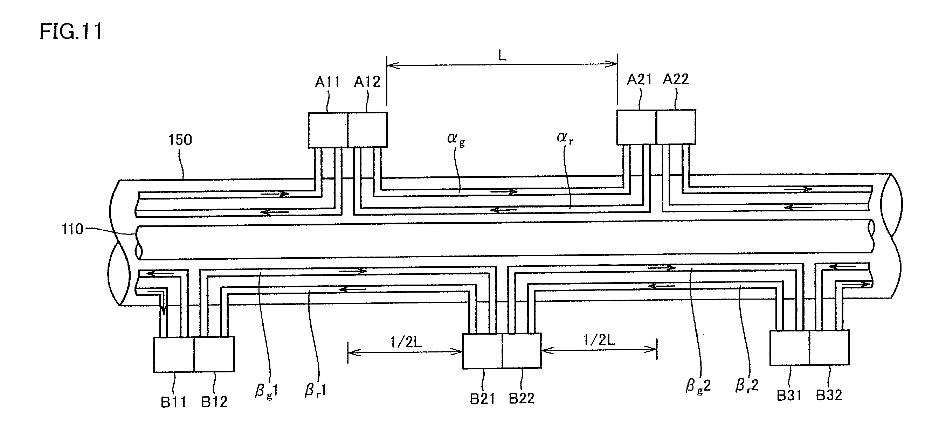

Then, the superconducting cable line and the operating method thereof will be hereinafter described with reference to Fig. 11. The superconducting cable line of the present example includes a superconducting cable in the first and second embodiments. In the following description, the cable itself will not be explained, but the structure of the line related to the operation method will be mainly explained.

{Configuration}

The present example provides a plurality of cooling stations that are arranged at prescribed intervals in the longitudinal direction of the superconducting cable. Each cooling station includes at least a refrigerator for cooling a coolant and a pump for pumping the coolant. The distance between the cooling stations is assumed to be a unit section length L of the coolant flow path through which the coolant can be pumped. A plurality of cooling sections each having unit section length L are arranged in series in the longitudinal direction of the superconducting cable. Cooling stations A1, A2 ... (B1, B2 ...) each include two independent division stations A12 and A21 (B11, B12, B21, B22 ...). Each of division stations A11, A12, A21, and A22 ... (B12, B21, B22, B31 ...) supplies a coolant to a pair of coolant tubes $\alpha g$ and $\alpha r$ ($\beta g1$, $\beta r1$, $\beta g2$, $\beta r2$) forming a coolant flow path in the opposite directions in the same section. It is to be note that the logarithm of these coolant tubes $\alpha g$ and $\alpha r$ ($\beta g1$, $\beta r1$, $\beta g2$, $\beta r2$) may be a plurality of pairs. In other words, in one division station, a coolant is supplied to one coolant tube forming a forward path or a return path as shown or to a plurality of coolant tubes that are not shown. In this superconducting cable line, an explanation will be given by way of example with regard to the case where four coolant tubes are provided as seen in the cross section of the superconducting cable. Among them, a pair of coolant tubes $\alpha g$ and $\alpha r$ are coupled to the side of cooling stations A1 and A2 while other pair of coolant tubes Pal and $\beta r1$ are coupled to the side of cooling stations B1 and B2. The cooling sections of coolant tubes αg and αr each connecting between these cooling stations A1 and A2 overlap with the half lengths of the cooling sections of coolant tubes βg1 and βr1 each connecting between cooling stations B1 and B2, and further overlap with the half lengths of the cooling sections of coolant tubes βg2 and βr2 each connecting between cooling stations B2 and B3. In other words, cooling station B2 is disposed in an intermediate portion between cooling stations A1 and A2.

{Operating Method}

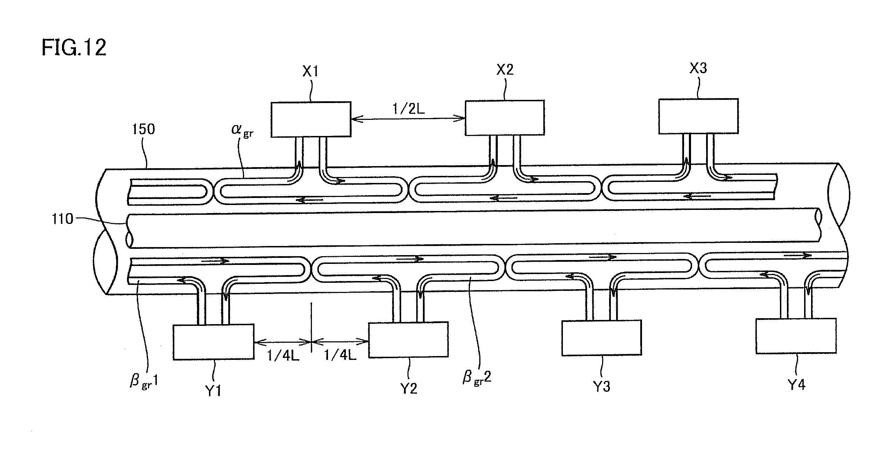

In the superconducting cable line having the configuration as described above, it is assumed that a failure occurs in at least one of division stations A12 and A21, and a coolant cannot be circulated through coolant tubes αg and αr. In this case, the cooling sections of coolant tubes αg and αr overlap with the half lengths of the coolant sections of coolant tubes βg1 and βr1, and also with the half lengths of coolant tubes βg2 and βr2. Accordingly, if the coolant is supplied to coolant tubesβ g1, βr1, βg2, and βr2 using cooling stations B1 to B3, the cooling sections of coolant tubes αg and αr can also be cooled. It is preferable that the coolant flowing through each of coolant tubes βg1, βr1, βg2, and βr2 lowers the temperature of each coolant tube and increases the flow rate per unit time as required, thereby improving the cooling performance. Although Fig. 11 (Fig. 12 described later) shows coolant tubes αg and αr (βg1, βr1, βg2, βr2) in a linear shape (Fig. 12 described later) for convenience of explanation, these coolant tubes may be actually S-Z twisted around the outer circumference of core 110 in a spiral manner. Not only when each coolant tube is S-Z twisted, but also when each coolant tube is disposed almost linearly, core 110 can be sufficiently cooled throughout its entire circumference and its entire length. This is because the following consideration is taken. Specifically, when each coolant tube has an almost linear shape, the position of the coolant tube is displaced for each prescribed length of the linear coolant tube by one fixed distance to the position of the adjacent coolant tube as described above. Thereby, when each coolant tube is S-Z twisted, the position of each coolant tube is displaced as it is uniformly throughout the entire cable line, so that uniformity can be maintained averagely throughout the entire composite core unit.

{Functions and Effects}

If the length of the superconducting cable line is increased, it is important to efficiently cool this superconducting cable line throughout its entire length, and also to cause the coolant to circulate through the line with certainty and reliability while maintaining the arrangement of the coolant uniformly with respect to the core. According to the superconducting cable line of the present example, among the plurality of coolant tubes, the cooling section of a part of the coolant tubes overlaps with the cooling section of another coolant tube. Thereby, even when the cooling section of this part of the coolant tubes cannot be cooled, the cooling section of another coolant tube is cooled, thereby being capable of ensuring cooling of the entire length of the line.

[Fifth Embodiment: Superconducting Cable Line; Series of Forward-and-Return Paths]

Then, the superconducting cable line and the operating method thereof will be hereinafter described with reference to Fig. 12. This superconducting cable line also includes a superconducting cable in the first and second embodiments.

{Configuration}

The present example also provides a plurality of cooling stations X1, X2 ..., Y1, Y2 ... that are arranged at prescribed intervals in the longitudinal direction of the superconducting cable. Cooling stations X1, X2 ... Y1 and Y2 ... supply coolants to coolant tubes αgr, βgr1, βgr2 ..., respectively, each forming a series of forward-and-return paths. Since the entire length of each of a plurality of forward-and-return paths or a single forward-and-return path corresponds to a unit section length L, adjoining cooling stations X1 and X2 ... (Y1, Y2 ...) are arranged in parallel at a distance of L/2. Then, the cooling section of coolant tube αgr overlaps with the half length of the cooling section of coolant tube βgr1, and also with the half length of the cooling section of coolant tube βgr2. In other words, cooling station X1 exists in an intermediate portion between cooling stations Y1 and Y2, and the distance from cooling station X1 to each of cooling stations Y1 and Y2 in the longitudinal direction of the line is L/4. The turn-around point of each of coolant tubes αgr, βgr1, βgr2 ... is formed by cutting coolant tube 130 in close contact with or close to core 110 or inside housing tube 170 at the connection unit or the like of housing tube 150, and then re-connecting the corresponding coolant tube for a forward path to coolant tube 130 for a return path by an U-shaped coupling tube and the like separately provided.

{Operating Method}

It is assumed that the coolant cannot be supplied to coolant tube αgr due to a failure occurring in cooling station X1 in the above-described line. In this case, when the coolant is supplied to coolant tube βgr1 by cooling station Y1 and the coolant is supplied to coolant tube βgr2 by cooling station Y2, the core of the cooling section in coolant tube αgr can also be cooled. This is because the cooling section of coolant tube αgr overlaps with the half length of the cooling section of coolant tube βgr1, and also with the half length of the cooling section of coolant tube βgr2. It is of course preferable that the coolants flowing through coolant tubes βgr1 and βgr2 lower the temperature of each coolant tube and increases the flow rate per unit time as required, thereby improving the cooling performance. Furthermore, when an inside housing tube or the like is provided, it is further effective to conduct control, for example, for increasing the auxiliary coolant flowing therethrough.

{Functions and Effects}

According to the superconducting cable line of the present example, among a plurality of coolant tubes, the cooling section of a part of the cooling tubes overlaps with the cooling section of another coolant tube. Consequently, even when this part of the coolant tubes cannot be cooled, the cooling section of another coolant tube is cooled, thereby being capable of ensuring cooling of the entire length of the line.

[Sixth Embodiment: Superconducting Cable Line; Separation Mechanism]

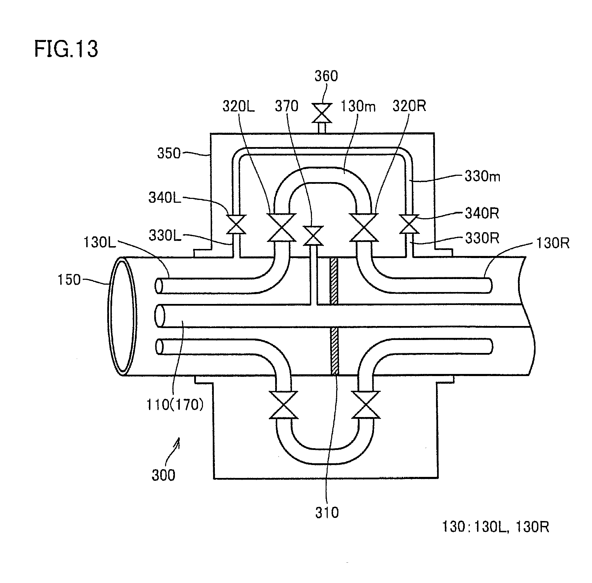

Then, the superconducting cable line including a separation mechanism in an intermediate portion of the superconducting cable will be hereinafter described with reference to Fig. 13. This superconducting cable line also includes a superconducting cable in the first and second embodiments. The configuration of a separation mechanism 300 will be mainly described in the present example. Reduced number of coolant tubes is shown in Fig. 13 for convenience of explanation.

{Configuration}

Separation mechanism 300 serves to partition the space within housing tube 150 forming a superconducting cable into one space and the other space in the longitudinal direction, for introducing a coolant into coolant tube 130 for each space and for producing a vacuum within housing tube 150. When the superconducting cable line is increased in length, it is impractical to introduce the coolant into coolant tube 130 and to produce a vacuum within housing tube 150 throughout its entire length of the line. Accordingly, by dividing the line into a plurality of sections, performing operations for each section such as introduction of the coolant into coolant tube 130 and vacuuming within housing tube 150 and the like, and monitoring the operation status for each section, it becomes possible to readily construct a superconducting cable line that is reliable throughout the entire length. This type of dividing operation is usually performed at the connection unit of cable core 110. However, as in the superconducting cable of the present invention, if coolant tube 130 and core 110 are separated from each other and are different in continuous length at the connection unit, separation mechanism 300 can be suitably utilized.

Specifically, this separation mechanism 300 includes a partition member 310, one pull-out portion 130L, the other pull-out portion 130R, and a coupling coolant tube 130m. Partition member 310 partitions the inside space of housing tube 150 into one space and the other space in its longitudinal direction. A circular plate having a through hole for core 110 (inside housing tube 170) formed therein can be utilized for this partition member 310. One pull-out portion 130L is formed by bending the end of coolant tube 130 within one space or connecting an L-shaped branch tube to the end of linear coolant tube 130, and inserting the same through housing tube 150, and then pulling out the same to the outside of housing tube 150. The other pull-out portion 130R is formed by bending coolant tube 130 within the other space or similarly connecting an L-shaped branch tube to the end of linear coolant tube 130, and inserting the same through housing tube 150, and then pulling out the same to the outside of housing tube 150. In the present example, valves 320L and 320R are provided in pull-out portions 130L and 130R, respectively. These pull-out portions 130L and 130R are connected by coupling coolant tube 130m. This coupling coolant tube 130m is a C-shaped or U-shaped tube configured such that it can be attached to each of pull-out portions 130L and 130R. This coupling coolant tube 130m is removed from pull-out portions 130L and 130R when the coolant is introduced into coolant tube 130.

In order to address the case where a vacuum is produced within housing tube 150, separation mechanism 300 of the present example is provided with one exhaust tube 330L in communication with one space from outside of housing tube 150; the other exhaust tube 330R in communication with the other space from outside of housing tube 150; and a communicating tube 330m connecting these exhaust tubes 330L and 330R. Exhaust tubes 330L and 330R are also provided with valves 340L and 340R, respectively. Communicating tube 330m is formed of an approximately C-shaped or U-shaped tube as with coupling coolant tube 130m. Communicating tube 330m is removed from exhaust tubes 330L and 330R when a vacuum is produced in each space within housing tube 150.

The coolant flow path including pull-out portions 130L and 130R and coupling coolant tube 130m, and the exhaust path including both exhaust tubes 330L and 330R and communicating tube 330m are housed within an openable dividing case 350 that is attached to the outer circumferential surface of the housing tube. Dividing case 350 is an annular case attached throughout the entire circumference of housing tube 150. Although not shown, housing tube 150 may often be connected to the attachment part of this dividing case 350, and the connection piping may often be fitted into the intermediate portion of housing tube 150 and connected thereto. The outer circumferential surface of this dividing case 350 is provided with a short tube in communication with the inner space of this case 350. This short tube is also provided with a valve 360. After attachment of dividing case 350, this short tube and valve 360 are used for producing a vacuum therein for improving the thermal insulating effect within dividing case 350.

In addition, in order to address the case where inside housing tube 170 housing core 110 is filled with an auxiliary coolant or gas, or in order to identify the point where a failure occurs in the cable line, a branch tube is provided that extends from inside housing tube 170 and passes through housing tube 150 to the outside. This branch tube is also provided with a valve 370. When required, dividing case 350 is opened to check the vacuum state and the coolant state within inside housing tube 170 using valve 370, and then, produce a vacuum or introduce liquid nitrogen, thereby allowing the line to be recovered to its original state.

Such separation mechanism 300 is preferably provided at intervals of 5 km to 20 km, for example, depending on the conditions of the position where the superconducting cable is installed. Furthermore, when the cable line has an unusual point such as a bent portion and a saddle portion or a portion intersecting another hot water tube, it is also preferable that separation mechanism 300 is provided near the unusual point since the cable line can be smoothly operated with reliability and stability.

{Utilization Procedure, and Functions and Effects}

When the coolant is initially introduced into the coolant tubes, coupling coolant tube 130m is removed, each of valves 320L and 320R is opened, and the coolants are separately introduced into coolant tubes 130. Thereby, the coolant supply status can be monitored for each coolant tube. When introduction of the coolant into coolant tube 130 is completed, coupling coolant tube 130m is attached to pull-out portions 130L and 130R. When each of valves 320L and 320R is opened, both coolant tubes 130 can be configured as a series of coolant flow paths.

The same also applies to the case where a vacuum is produced within housing tube 150. Communicating tube 330m is removed from both of exhaust tubes 330L and 330R in advance. In this state, a vacuum is produced within each of the right-side space and the left-side space partitioned by partition member 310 from exhaust tubes 330L and 330R. Then, when communicating tube 330m is attached to both exhaust tubes 330L and 330R and valves 340L and 340R are opened, it becomes possible to bring about a vacuum state in which the right-side space and the left-side space partitioned by partition member 310 are in communication with each other.

When an auxiliary coolant and the like are supplied into inside housing tube 170, it can be supplied through the branch tube by opening valve 370. After introduction of the auxiliary coolant, valve 370 only has to be closed. When the flow rate of the auxiliary coolant is increased for circulation at the time when a failure occurs, this branch tube can also be connected to the cooling station for an auxiliary coolant. Furthermore, valve 370 can be effectively utilized also for detecting and identifying abnormalities within the inside housing tube.

[Seventh Embodiment: Superconducting Cable Line; Power Extracting Unit]

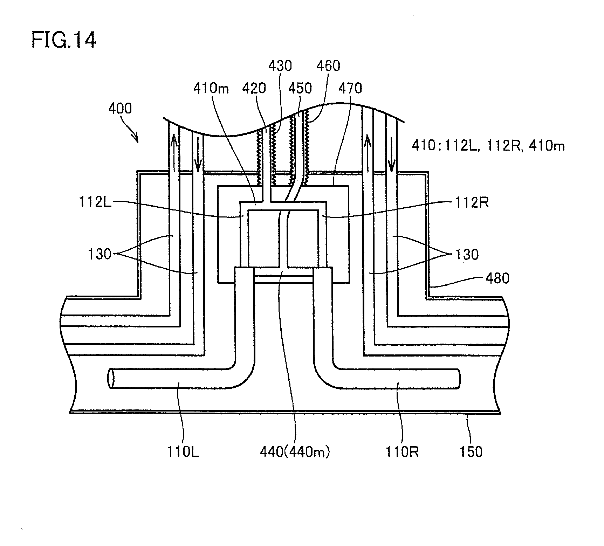

Then, an explanation will be given with reference to Fig. 14 with regard to the superconducting cable line including a power extracting unit in an intermediate portion of the superconducting cable, particularly at the installation position of the cooling station. This superconducting cable line also includes a superconducting cable in the first and second embodiments. In the present example, an explanation will be given mainly with regard to the configuration of power extracting unit 400, by way of example, by referring to the case where power is transmitted using an inside superconducting conductor layer as a direct-current forward path conductor (on the high-voltage side) and an outside superconducting conductor as a direct-current return path conductor (on the low-voltage side). For convenience of explanation, reduced number of coolant tubes is shown in Fig. 14.

{Configuration}

This power extracting unit 400 has a branch structure for extracting, from cores 110L and 110R, electric power for driving the cooling stations and the like shown in the fourth and the fifth embodiments. When the superconducting cable line is increased in length, a part of the superconducting cable may be installed in the region such as wilderness or a desert where there is no power generation facility in the neighborhood. In this case, since it is difficult to supply the electric power for driving accessory devices such as a cooling station from outside, the transmission power through the core is branched and utilized. More specifically, power extracting unit 400 includes a superconducting inside pull-out conductor 410, a superconducting outside pull-out conductor 440, a terminal box 470, one normal-conducting lead 420, and the other normal-conducting lead 450.

Superconducting inside pull-out conductor 410 is formed of inside conductor layers 112L and 112R pulled out from cores 110L and 110R, respectively, and a coupling superconducting member 410m connected to inside conductor layers 112L and 112R. Superconducting outside pull-out conductor 440 is formed of an outside conductor layer pulled out from cores 110L and 110R, and a coupling superconducting member 440m connected to the outside conductor layer. Left-side core 110L and right-side core 110R partitioned by power extracting unit 400 are stripped to expose the inside conductor layer and the outside conductor layer. The inside conductors of both cores 110L and 110R are connected to each other through coupling superconducting member 410m. The outside conductors of both cores are connected to each other through coupling superconducting member 440m. It is preferable that an insulation structure such as an insulating cylinder and an insulator is formed on the outer circumference of the inside (outside) conductor layer pulled out from cores 110L and 110R.

Terminal box 470 is filled with a coolant for cooling these pull-out conductors 410 and 440. By disposing coolant tube 130 around terminal box 470, the coolant within this terminal box 470 can be cooled using the coolant within coolant tube 130. A small-scale cooling station (not shown) may be of course provided for the coolant within terminal box 470.

One normal-conducting lead 420 is connected to coupling superconducting member 410m forming superconducting inside pull-out conductor 410, to form an electric path so as to extend from terminal box 470 toward the room temperature side. The other normal-conducting lead 450 is connected to superconducting outside pull-out conductor 440 to form an electric path so as to extend from terminal box 470 toward the room temperature side. On the outer circumference of each of normal-conducting leads 420 and 450, insulation structures 430 and 460 such as an insulating cylinder and an insulator are arranged. Although the electric power extracted from each of normal-conducting leads 420 and 450 is used for driving the components of the cooling station, for example, a refrigerator or a pump, the electric power may be connected to the battery for a cooling station, and used for always keeping the battery charged as required.

These superconducting inside pull-out conductor 410, superconducting outside pull-out conductor 440, terminal box 470, and a part of each of normal-conducting leads 420 and 450 are housed within a pull-out box 480. Pull-out box 480 is a container-shaped member provided on the outer circumference of housing tube 150. The internal space of pull-out box 480 is in communication with housing tube 150, in which a vacuum is produced or with which a heat-insulating material is filled as required. Valves and the like required for producing a vacuum in pull-out box 480 is not shown in Fig. 14.

On the other hand, coolant tube 130 extends along each of cores 110L and 110R, passes through pull-out box 480, and is pulled out from inside of housing tube 150 to outside thereof. These coolant tubes 130 are also connected to the cooling station.

{Functions and Effects}

The line of the present invention is a superconducting cable line, in which the resistance of each of the inside and outside conductors is substantially zero. Accordingly, even if electric power is branched and extracted at an intermediate portion of the line, no slight influence is exerted upon the voltage at the receiving end to which power is transmitted. For taking advantage of this feature, by providing a power extracting unit in the intermediate portion of the line, it becomes possible to extract the electric power for the cooling station from cores 110L and 110R that are power transmission lines through which power can be transmitted with the help of driving of the cooling station. Accordingly, it is not necessary to separately transmit electric power as power for a cooling station from an electric power plant and the like, or not necessary to dispose the power generating means such as a solar cell and a wind power generator utilizing renewable energy for each cooling station so as to be located near the cooling station. Since electric power is branched from cores 110L and 110R, the cooling station can be driven with stability without exerting an influence upon power generation output by the weather or the like as in the case of the power-generating means using renewable energy. Accordingly, it is effective particularly in dramatically improving the reliability of a long-distance superconducting cable line. After construction of the superconducting cable line, as a power supply for a cooling station required for actuation, a temporarily-provided power supply or an emergency power supply may be used only when required.

The electric power required for driving a cooling station is usually only about 0.01 to 0.1% of the electric power transmitted through the superconducting cable. Accordingly, the power loss caused by the above-mentioned power branch during power transmission through the superconducting cable line is suppressed to be very slight.

[Eighth Embodiment: Superconducting Cable Line; Cooling-Adjustment Heat-Insulating Material (Flat Installation)]

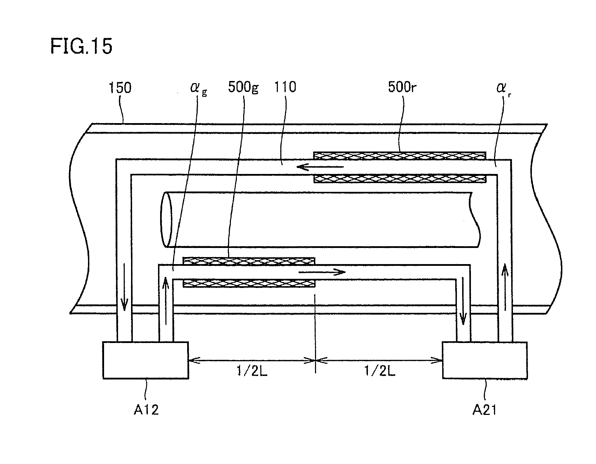

Then, the superconducting cable line including a cooling-adjustment heat-insulating material in the intermediate portion of the superconducting cable will be hereinafter described with reference to Fig. 15. This superconducting cable line also includes a superconducting cable in the first and second embodiments, and the relation between the cooling station and each coolant tube is the same as that in the fourth embodiment.

{Configuration}

This line includes a coolant tube αg connecting between division stations A12 and A21 that are arranged at the positions with almost no difference in height, and a coolant tube αr similarly connecting between division stations A12 and A21. Coolant tube αg serves as a forward path tube of the coolant while coolant tube αr serves as a return path tube of the coolant.

Cooling-adjustment heat-insulating materials 500g and 500r are provided, respectively, in a section corresponding to the half length of coolant tube αg on the coolant introducing side, that is, the half length on the cooling station A12 side, and in a section corresponding to the half length of coolant tube αr on the coolant introducing side, that is, the half length on the cooling station A21 side. These heat-insulating materials 500g and 500r can be used in the state where a well-known heat-insulating material is wound around the outer circumference of each coolant tube. Although Fig. 15 shows cooling-adjustment heat-insulating materials 500g and 500r each having a thickness that is uniform in the longitudinal direction of each coolant tube, a tapered heat-insulating material may be used that has a thickness decreased from the coolant introducing side toward the return side.

{Functions and Effects}

According to this line, when a coolant is introduced into a coolant tube at the time of initial cooling after line construction and at the time of resuming cooling after stopping some of the line, the superconducting cable can be cooled almost uniformly throughout its entire length. The superconducting cable can be cooled faster as being closer to the coolant introducing side, and can be cooled slower as being closer to the side to which the coolant is returned. Accordingly, by providing cooling-adjustment heat-insulating materials 500g and 500r at the positions corresponding to the coolant introducing side, cooling on the coolant introducing side can be alleviated, and the cooling degrees of the introducing side and the side opposite thereto can be rendered uniform. When using the tapered heat-insulating material having a thickness that is decreased from the coolant introducing side toward the return side, the heat-insulating material is formed to have a thickness that is increased as being closer to the introducing side at which cooling starts earlier, and decreased as being closer to the return side at which cooling starts with more delay. This allows the core to be cooled much more uniformly throughout its entire length. Furthermore, when accumulation of shrinkage of the core due to cooling is more likely to occur as in the case of a single core cable and the like, the shrinkage amount appearing at both terminals of the cable line can be rendered equal by utilizing a cooling-adjustment heat-insulating material.

[Ninth Embodiment: Superconducting Cable Line; Cooling-Adjustment Heat-Insulating Material (Inclined Installation)]

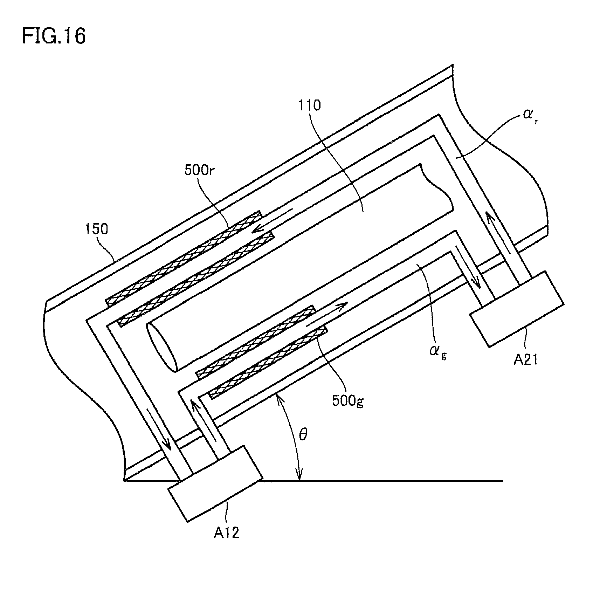

Then, the superconducting cable line including a cooling-adjustment heat-insulating material in the intermediate portion of the superconducting cable will be hereinafter described with reference to Fig. 16. This superconducting cable line also includes a superconducting cable in the first and second embodiments, and the relation between the cooling station and each coolant tube is the same as that in the fourth embodiment. It is to be noted that the cooling stations are installed at positions with a difference in height, and the cooling section therebetween is inclined. The differences from the eighth embodiment will then be described.

{Configuration}

In the present example, cooling station A12 is installed at a relatively lower position while cooling station A21 is installed at a relatively higher position, in which coolant tubes αg and αr connecting therebetween are arranged at an inclined angle θ. Coolant tube αg serves as a forward path tube of the coolant while coolant tube αr serves as a return path tube of the coolant.

Cooling-adjustment heat-insulating materials 500g and 500r are provided, respectively, in this coolant tube αg on the coolant introducing side and in coolant tube αr on the coolant return side, that is, in the sections of the half lengths of coolant tubes αg and αr on the cooling station A12 side. These cooling-adjustment heat-insulating materials 500g and 500r each may have a thickness that is uniform in the longitudinal direction, but may be a tapered heat-insulating material having a thickness that is decreased as being closer to the lower position side at which cooling can readily progress.

{Functions and Effects}

According to the above-described line, even in the case where the installation path of the superconducting cable is different in height in which one cooling station is installed at a relatively lower position while the other cooling station is installed at a relatively higher position, the superconducting cable can be cooled while rendering the shrinkage stress caused by cooling the superconducting cable almost uniformly throughout its entire length when a coolant is introduced into coolant tubes αg and αr. In the case where the installation positions of both cooling stations are different in height, when a coolant is introduced into the coolant tube connecting between these cooling stations, the stress caused by gravity tends to be added to the cable on the lower position side and appear thereon. Accordingly, the cable core can be readily moved toward the above-mentioned relatively lower position. When the superconducting cable is repeatedly cooled and then returned to the room temperature, the cable core is to further slide down toward the above-mentioned relatively lower position. Then, the cable core may be finally damaged. On the other hand, when cooling-adjustment heat-insulating materials 500g and 500r are provided in coolant tubes αg and αr, respectively, on the above-mentioned relatively lower position side, it becomes possible to suppress the stress concentration on this relatively lower position caused by cooling of the superconducting cable, thereby being capable of preventing the cable core from sliding from the relatively lower position toward the relatively higher position.

[Tenth Embodiment: Superconducting Cable Line; Monitoring of Cooling Degree]

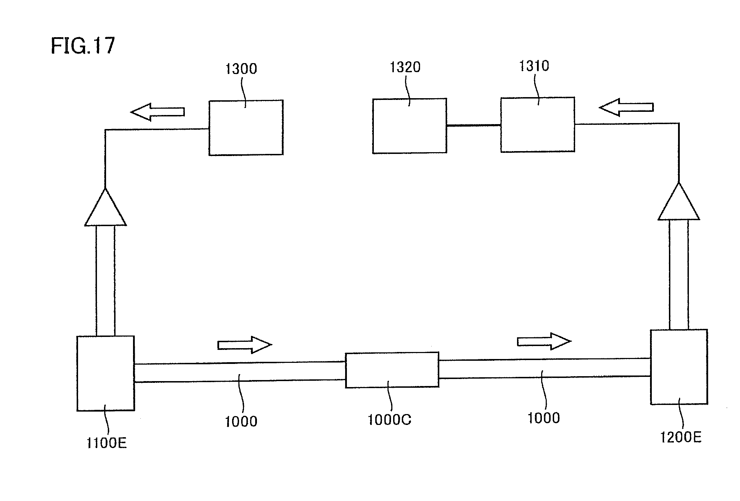

Then, an explanation will be given with reference to Fig. 17 with regard to the superconducting cable line for which it can be confirmed whether the superconducting conductor layer can be sufficiently cooled or not throughout the entire length of the superconducting cable line at the initial stage of installation of the superconducting cable, and the like.
When cooling by the coolant sufficiently progresses and the superconducting conductor layer is cooled to a liquid nitrogen temperature (77K) or lower throughout its entire length, it becomes possible to carry out the operation of the superconducting cable. On the other hand, if at least a part of the entire line cannot be sufficiently cooled, not only the operation is carried out, but also forced energization may impair the superconducting state at an insufficiently cooled portion, thereby causing the so-called quench accident in which finite resistance appears, with the result that the cable may be significantly damaged. Therefore, it is extremely important to determine whether the entire superconducting cable line is cooled to a required cooling temperature or not at the time of initial cooling, recooling and the like immediately after installation of a long superconducting cable line. Particularly in the superconducting cable of the present invention, the time period required to achieve sufficient cooling is relatively long as compared with the case of the existing superconducting cable in which the core is immersed in the coolant. Accordingly, the technique for determining sufficiency of cooling throughout the entire length is important.

[Configuration]

This superconducting cable line is provided at both ends with terminal connection units 1100E and 1200E which are connected by superconducting cable 1000 of the present invention described above. In this case, an intermediate connection unit 1000C connecting superconducting cables 1000 to each other at an intermediate portion therebetween is also shown. Such a superconducting cable line includes signal transmitting means 1300, signal receiving means 1310 and cooling determination means 1320 describe below in detail.
Signal transmitting means 1300 cause an electrical signal to be input from one terminal connection unit 1100E (on the left side in the figure in the present example) to the core (superconducting conductor layer) of superconducting cable 1000. For example, an electrical-signal generator of any frequency from a direct current to a radio frequency can be utilized as signal transmitting means 1300. In Fig. 17, the electrical signal is indicated by an outline arrow.
Signal receiving means 1310 is connected to the core (superconducting conductor layer) of superconducting cable 1000 by the other terminal connection unit 1200E (on the right side in the figure in the present example), and receives the above-mentioned electrical signal transmitted through superconducting cable 1000 as an output signal.
On the other hand, cooling determination means 1320 determines based on the level of the output signal received by signal receiving means 1310 whether the superconducting conductor layer of the core has reached the temperature or not at which the superconducting conductor layer is brought into a superconducting state throughout the entire length of the line. A specific determination method will be described later. A computer can be suitably utilized for this cooling determination means 1320, for example, that can be disposed near signal transmitting means 1300 or signal receiving means 1310, or disposed at a distance from means 1300 and 1310. When cooling determination means 1320 is installed at a distance from signal transmitting means 1300 or signal receiving means 1310, the data required for determination only has to be output to cooling determination means 1320 wirelessly or by wire.

[Functions and Effects]

Generally, assuming that the conductor resistance of the power cable is R and the capacitance is C (an explanation will be given herein by substituting a total resistance R and a total capacitance C without using a distributed constant for convenience), the state of propagation of the electrical signal through the power cable is expressed using $\tau$ (tau) = CR, which is the so-called "time constant". When this $\tau$ is increased, delay occurs in propagation of the electrical signal through the power cable. Then, the output waveform is disturbed while the propagating output itself is attenuated. However, when the superconducting cable line is sufficiently cooled throughout its entire length until it is brought into a superconducting state, R becomes zero. Accordingly, when an electrical signal is input from one end of the line, this signal instantaneously reaches the other end without propagation delay. Furthermore, this electrical signal is received at the other end without attenuation of the propagating output and disruption of the waveform. Therefore, at least in the latter half of the process of cooling the core, an electrical signal is continuously input by signal transmitting means 1300 from one end side of the superconducting cable line, and the output signal is continuously monitored by signal receiving means 1310 installed at the other end. Consequently, when cooling determination means 1320 determines the moment at which the electrical signal is received without any disruption of the waveform and without any delay, it becomes possible to determine that the entire superconducting cable line has been cooled to the level of the superconducting state at the point of time.

As described above, in the case of a superconducting cable having an inside housing tube through which an auxiliary coolant flows, the temperature of the coolant flowing out of the inside housing tube within this core is measured, thereby being capable of readily determining whether the above-described cooling degree is appropriate or not. However, in the case where a different type of superconducting cable line is used, it is difficult to determine whether appropriate cooling is performed or not throughout the entire length of the line. On the other hand, in the case of the line of the present example, the cooling degree of the core can be precisely determined even by the superconducting cable not having an inside housing tube.

On the other hand, in the case of a short superconducting cable line, by using an optical fiber distribution-type temperature sensor (DTS), an optical fiber serving as a sensor can be disposed to extend along the cable core, and the temperature distribution throughout the entire length of the cable core can be directly measured and determined. However, since a long superconducting cable line imposes a limitation on the length of the optical fiber that can be used, it becomes difficult to determine the cooling degree by using the DTS. On the other hand, according to the line of the present example, it becomes possible to precisely determine the cooling degree of the core throughout the entire length of the long line without having to use a sensor such as an optical fiber.

[Eleventh Embodiment: Monitoring Cooling Degree of Superconducting Cable]

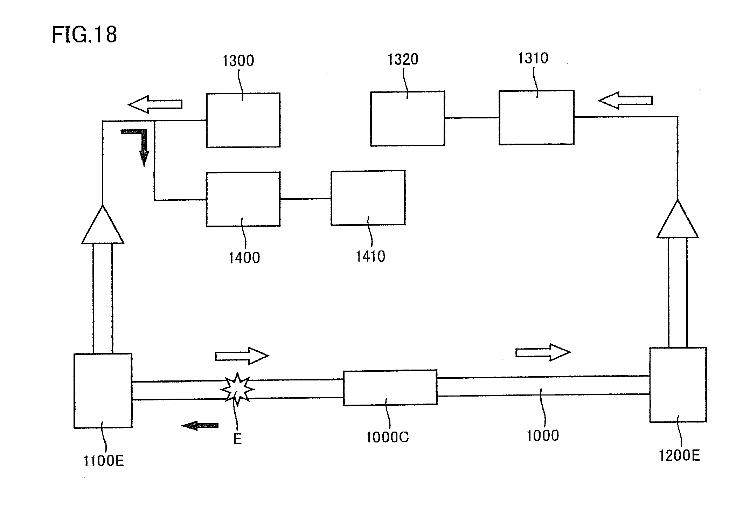

Then, an explanation will be given with reference to Fig. 18 with regard to the superconducting cable line of the tenth embodiment for which the position of the cooling failure (a fault point) occurring in the intermediate portion of the superconducting cable line can be identified. In the present example, differences from the tenth embodiment will be mainly described, but identical points will not be described.

[Configuration]

In addition to the configuration of the tenth embodiment, this superconducting cable line includes reflection signal receiving means 1400 and fault-point identifying means 1410. In this description, the portion where cooling of the superconducting conductor layer is locally insufficient in the intermediate portion of the superconducting cable is assumed to be a fault point E.

On one end of the superconducting cable line, reflection signal receiving means 1400 receives a reflection signal of the electrical signal at fault point E. This electrical signal is a signal input from the signal transmitting means to the superconducting conductor layer as in the tenth embodiment. The reflection signal is indicated by a black arrow in Fig. 18.

Fault-point identifying means 1410 calculates the position of fault point E based on the transmission rate of the above-mentioned electrical signal and reflection signal, and on the time period from the time when the electrical signal is input from signal transmitting means 1300 until the time when the reflection signal is received by reflection signal receiving means 1400. A computer can also be suitably utilized for this fault-point identifying means 1410 that is installed at the same position as that in the tenth embodiment. In Fig. 18, fault-point identifying means 1410 is provided near terminal connection unit 1100E on the one end side of the superconducting cable line (on the left side in Fig. 18).

[Functions and Effects]

In the above-described superconducting cable line, if there is fault point E in the intermediate portion of superconducting cable 1000, the electrical signal output from electrical-signal transmitting means 1300 is partially reflected at this fault point E, and returned to the one end side of the superconducting cable line corresponding to the output end of the electrical signal. This is because the electrical resistance increases locally at fault point E, at which impedance mismatch occurs.

On the other hand, the electrical signal and the reflection signal are already known. Accordingly, if the time period from the time when the electrical signal is input from the signal transmitting means until the time when the reflection signal is received by the reflection signal receiving means can be found, the position of fault point E can be calculated and obtained by fault-point identifying means 1410.

[Twelfth Embodiment: Superconducting Cable: Plurality of Core Groups]

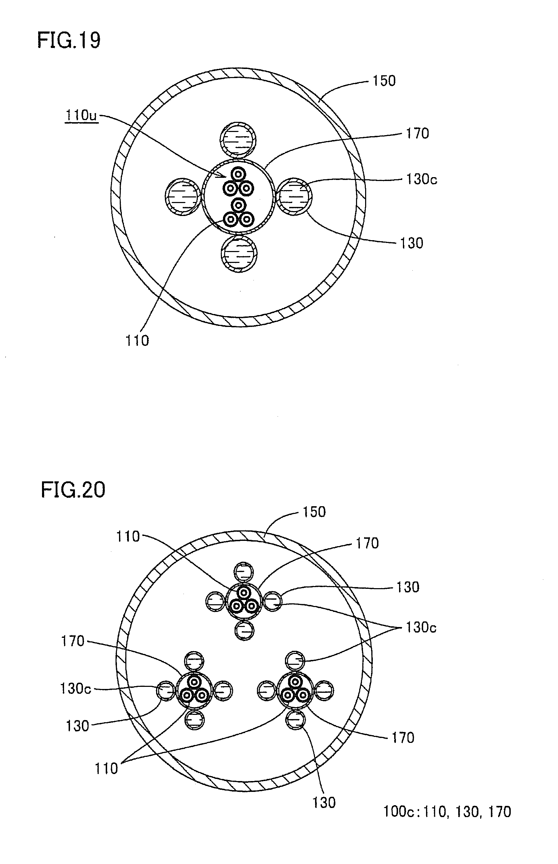

Then, a modification of the superconducting cable according to the first embodiment will be hereinafter described with reference to Fig. 19. The superconducting cable of the present example is different from the first embodiment in that a plurality of core units are housed within the inside housing tube. The other configurations are the same as those in the first embodiment. The differences will be mainly explained in the following description.

{Configuration}

The superconducting cable of the present example houses multi-channel cores 110 in inside housing tube 170. Specifically, when three twisted cores 110 are defined as a core unit 110u, each core unit 110u is set as a transmission path having one channel. In Fig. 19, two sets of core units 110u are arranged within inside housing tube 170. The number of core units 110u may be of course three sets or more. One channel is not configured in the form of core unit 110u, but a single core 110 is defined as one channel, and a plurality of cores 110 are housed within inside housing tube 170, thereby also being capable of forming a transmission path having multiple channels.

In the superconducting cable of the present example, inside housing tube 170 and bundling band 140 (see Figs. 1 and 2) are not indispensable, but only have to be provided as required. Furthermore, cores 110 or core units 110u forming each channel are insulated from each other by an appropriate partition member (not shown) or positioned with respect to each other within inside housing tube 170 by an appropriate spacer (not shown), and thereby can be maintained so as to be not in contact with each other. The space between housing tube 150 and composite core unit 100c obtained by combining core 110 and coolant tube 130 may be maintained under vacuum or may be filled with a heat-insulating material (not shown).

{Functions and Effects}

According to the superconducting cable of the present example, the transmission path having multiple channels can be disposed within one housing tube 150. Accordingly, it becomes possible to construct a highly reliable superconducting cable line while reducing the space in which a superconducting cable is installed.

When an ultra-long distance (for example, 100 km to 1000 km or longer) superconducting cable line is constructed in the Sahara Solar Breeder Project or the like, the transmission capacity is extremely increased and, in addition, multiple channels are to be installed in terms of reliability of power transmission. It is preferable in this case that the installation space of the cable is relatively small in terms of the superficies. In particular, when multiple channels are installed in parallel, not only the installation space of the cable itself is increased, but also accessory equipment such as a refrigerator of a coolant, a pump and a tank is required for each channel, thereby greatly increasing the installation space.

Thus, by arranging a plurality of (channel) cores 110 (core units 110u) within one housing tube 150, it becomes possible to allow ultra-large capacity power transmission or readily implement power transmission through multiple channels. Accordingly, even when some of the channels are interrupted, power transmission is ensured by another channel. Also, power transmission is performed using some of cores 110 at the beginning of installation, and at least a part of remaining cores 110 is utilized ex-post facto, thereby allowing an increase in the capacity. Particularly in the configuration of the present example, a plurality of cores 110 (core units 110u) can be collectively cooled, and the refrigerator and the pump used for cooling a plurality of multi-channel cores (core unit 110u) can be shared.

[Thirteenth Embodiment: Superconducting Cable: Plurality of Composite Core Units]

Then, a modification of the superconducting cable according to the first embodiment will be hereinafter described with reference to Fig. 20. The superconducting cable of the present example is different from the first embodiment in that a plurality of composite core units are housed within one housing tube. Other configurations are the same as those in the first embodiment. The differences will be mainly explained in the following description.

{Configuration}

In the present example, three sets of composite core units 100c are housed within one housing tube 150. Accordingly, when a three-phase alternating current is transmitted through one composite core unit 100c, a three-phase alternating current can be transmitted through each of three channels. Of course, the number of composite core units 100c is not necessarily limited to three, but may be two or may be four or more.

Each of composite core units 100c is arranged so as to be located at the vertex of a regular triangle. Due to this arrangement, cores 110 forming any composite core unit 100c can be cooled uniformly. Each of composite core units 100c may of course be arranged in a different manner. When a vacuum is produced within housing tube 150, each of composite core units 100c is held by a spacer (not shown) interposed in the longitudinal direction of the housing tube at an appropriate distance between the inner surface of housing tube 150 and each composite core unit 100c. Also, when housing tube 150 is filled with a heat-insulating material (not shown), each of composite core units 100c is held by this heat-insulating material.

{Functions and Effects}

Also in the superconducting cable of the present example, the transmission path having multiple channels can be arranged within one housing tube 150 as in the twelfth embodiment. Accordingly, it becomes possible to construct a highly reliable superconducting cable line while reducing the space in which a superconducting cable is installed. Furthermore, since a plurality of composite core units 100c are provided in one housing tube 150, installation can be implemented in a space-saving manner. In addition, cores 110 or a core group forming composite core unit 100c can be cooled in units per composite core unit 100c. Accordingly, even if a defect occurs in the cooling station of any of cores (core group), no trouble occurs in cooling of other cores (a core group). Of course, the number of cooling stations may be reduced by sharing cooling stations in some of composite core units 100c or all composite core units 100c.

[Fourteenth Embodiment: Superconducting Cable: Additional Coolant Tube]

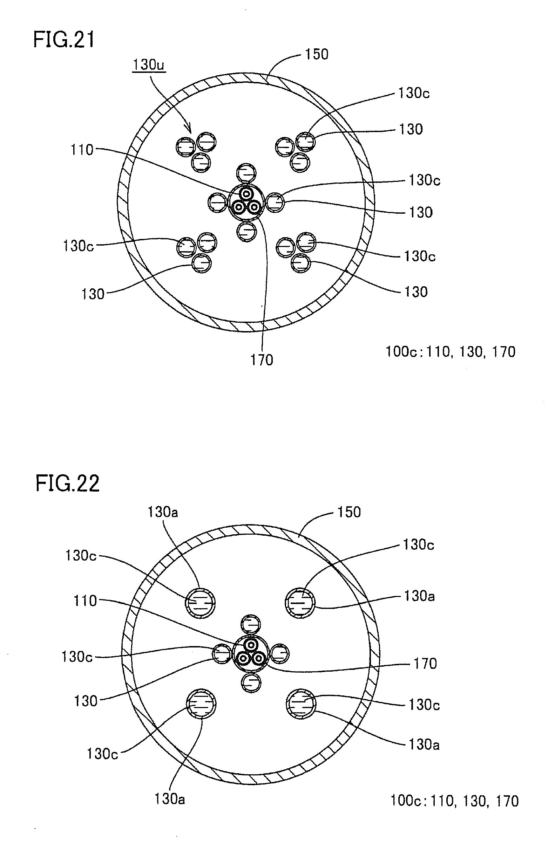

Then, a modification of the superconducting cable according to the first embodiment will be hereinafter described with reference to Fig. 21. The superconducting cable of the present example is the same as that of the first embodiment in that one composite core unit is provided within one housing tube, but is different in that a plurality of additional coolant tubes are further arranged around this composite core unit. Other configurations are the same as those in the first embodiment. The differences will be mainly explained in the following description.

{Configuration}

The superconducting cable shown in Fig. 21 includes one composite core unit 100c at the center within housing tube 150, and four coolant tube units 130u are arranged so as to surround this one composite core unit 100c. Each coolant tube unit 130u is configured by arranging a plurality of coolant tubes 130 in parallel or by twisting these coolant tubes 130. In the present example, three coolant tubes 130 are arranged in parallel to form coolant tube unit 130u, and each coolant tube unit 130u is arranged within housing tube 150 so as to be located at the vertex of a square.

On the other hand, the superconducting cable shown in Fig. 22 has a configuration in which each of coolant tube units 130u shown in Fig. 21 is replaced with one additional coolant tube 130a. It is to be noted that additional coolant tubes 130a surrounding composite core unit 100c in Fig. 22 has a diameter larger than that of each coolant tube forming coolant tube unit 130u in Fig. 21.

{Functions and Effects}

The ultra-long distance superconducting cable should be able to sufficiently cool core 110 even when the cooling stations are arranged at increased intervals from each other. By arranging a plurality of coolant tube units 130u or additional coolant tubes 130a (which will be hereinafter simply referred to as coolant tube units etc.) within one housing tube 150, core 110 can be sufficiently cooled without increasing the space for installing the cable. Particularly even in the case where a vacuum is not produced within housing tube 150 (that is filled with a heat-insulating material), core 110 can be sufficiently cooled. Even when a defect occurs in any of the coolant tube units etc., core 110 can be cooled using other coolant tube units etc.

In addition, by changing the temperature and the flow rate of the coolant in each of the coolant tube units etc. or by changing the number of the coolant tube units etc. through which a coolant circulates, the cooling degree of core 110 can be readily adjusted and the power transmission capacity can also be adjusted.

[Fifteenth Embodiment: Superconducting Cable: Coolant Tube around Entire Circumference of Composite Core Unit]

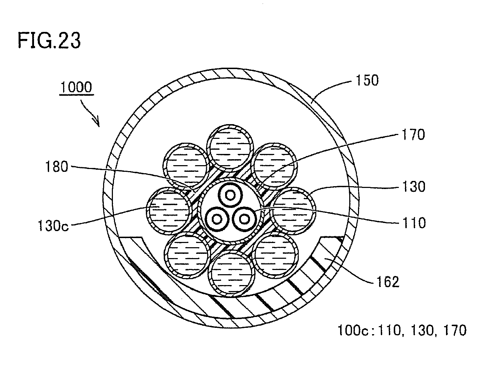

Then, a modification of the superconducting cable according to the first embodiment will be hereinafter described with reference to Fig. 23. Although the superconducting cable of the present example is the same as that of the first embodiment in that one composite core unit is provided within one housing tube, the composite core unit is configured such that the entire circumference of the inside housing tube is surrounded by coolant tubes and disposed on a partial heat-insulating layer. Other configurations are the same as those in the first embodiment. The differences will be mainly explained in the following description.

{Configuration}

In the superconducting cable of the present example, a partial heat-insulating layer 162 having an arc-shaped cross section is disposed in the lower portion of housing tube 150. This partial heat-insulating layer 162 has a cross-sectional area occupying a part of the internal space of housing tube 150, and is provided thereon with composite core unit 100c, thereby allowing this composite core unit 100c to be arranged almost coaxially with housing tube 150.

The space within housing tube 150 other than composite core unit 100c and partial heat-insulating layer 162 may be vacuated, or may be filled with an appropriate filler to form a filled heat-insulating portion as in Figs. 7 and 8.

On the other hand, coolant tubes 130 are arranged with almost no gap therebetween on the outer circumference of inside housing tube 170 in composite core unit 100c throughout the entire region in the circumferential direction. In the present example, a total of eight coolant tubes 130 are used. The number of coolant tubes 130 is of course not particularly limited, but the number of coolant tubes 130 may be such that coolant tubes 130 can surround the outer circumference of inside housing tube 170 or core 110 (core group) with almost no gap.

It is preferable that an appropriate cushion member 180 is disposed between inside housing tube 170 and each coolant tube 130. Cushion member 180 can suppress damage caused by contact between inside housing tube 170 and coolant tube 130, and also improve heat conduction therebetween, so that core 110 can be cooled much more efficiently. Various plastic materials, cloth, fibers and the like can be used for cushion member 180.

{Functions and Effects}

According to this configuration, by covering the entire circumference of core 110 disposed within inside housing tube 170 by coolant tubes 130 with almost no gap, the core can be cooled more efficiently as compared with the first embodiment. Particularly when the filled heat-insulating portion is formed within housing tube 150, core 110 can be cooled sufficiently without having to produce a vacuum within housing tube 150 and without having to use a vacuum insulating layer. Furthermore, each set of a plurality of coolant tubes 130, for example, each set of two coolant tubes, is put together by a header and connected to a cooling station, thereby eliminating the need to connect the cooling station for each coolant tube. Consequently, the number of cooling stations can be reduced. In contrast, when coolant tubes 130 are cooled separately, core 110 can be cooled using other coolant tubes 130 even if a failure occurs in the cooling station of any of coolant tubes 130. In addition, part of coolant tubes 130 and remaining coolant tubes 130, for example, adjoining coolant tubes, are formed as a coolant forward path and a coolant return path, respectively, thereby being capable of reducing a difference of the degree of cooling core 110 between the coolant introducing side and the coolant discharge side of coolant tube 130.

[Sixteenth Embodiment: Superconducting Cable: Bundling Structure A of Coolant Tube]

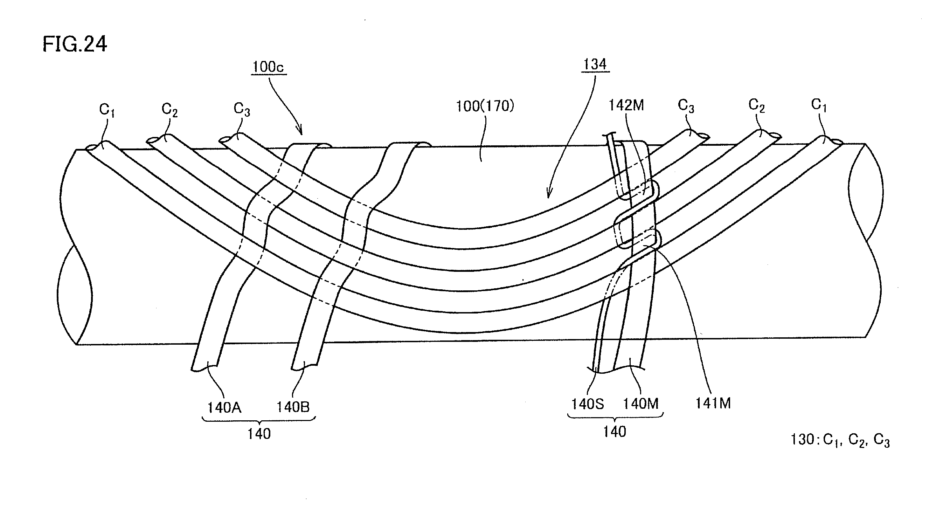

Then, a modification of the superconducting cable according to the first embodiment will be hereinafter described with reference to Fig. 24. This superconducting cable is different from the superconducting cable according to the first embodiment in the following points, and points other than those are the same.

 (1) The number of coolant tubes is greater than that in the first embodiment (for example, six).
 (2) A plurality of coolant tubes are S-Z twisted around the outer circumference of the core.
 (3) The structure of bundling the coolant tubes by a bundling band is different from that in the first embodiment.

Among the configurations of the superconducting cable according to the present example, hereinafter mainly described will be a bundling structure of the bundling band by which a plurality of S-Z twisted coolant tubes can be readily held. This bundling band may have a cord shape, but preferably a tape shape since it is readily inserted between the core and the coolant tube and between the coolant tubes. Furthermore, housing tube 150 (Figs. 1 and 2) is not shown. The above-mentioned features are also the same in the seventeenth and eighteenth embodiments described later.

{Configuration}

S-Z twisted coolant tube 130 includes an S-twisted portion where coolant tube 130 is twisted around the outer circumference of core 110 in one direction; a Z-twisted portion where coolant tube 130 is twisted in the direction opposite thereto; and an inverted portion interposed between the S-twisted portion and the Z-twisted portion and in which the twisting direction of coolant tube 130 is inverted. Fig. 24 is a diagram showing composite core unit 100c obtained by twisting coolant tube 130 around core 110 (inside housing tube 170 if this inside housing tube 170 is provided), as seen in lateral view. Fig. 24 also shows parts of coolant tubes 130 in a concave inverted portion 134 where coolant tube 130 is bent in a concave shape, in which the right side portion and the left side portion with respect to concave inverted portion 134 in the figure correspond to an S-twisted portion and a Z-twisted portion, respectively.

In such coolant tube 130, the twisting direction is repeatedly inverted in the middle, so that the twist can be readily untied. Accordingly, the twisted state of coolant tubes 130 may be displaced only by providing an annular bundling band 140 (140A and 140B) around the outer circumference of composite core unit 100c having coolant tubes 130 twisted around core 110 so as to be extend at prescribed intervals in the longitudinal direction of unit 100c, or only by winding bundling band 140 around the outer circumference of unit 100c in a spiral manner.

In the present example, in order to address the above-mentioned displacement of coolant tubes 130, as shown on the left side in Fig. 24, bundling band 140 binds a plurality of coolant tubes 130 together so as to provide a portion starting from the under side of the circumference of one coolant tube C1, passing over the upper side of the circumference of another coolant tube C2, and then reaching the under side of the circumference of still another coolant tube C3. More specifically, bundling band 140 is disposed on the outer circumference of core 110 in a corrugated form so as to extend alternately on the upper side of the circumference (on the side opposite to core 110) of coolant tube 130 and the under side of the circumference (on the core 110 side) of adjoining coolant tube 130. Bundling band 140 disposed on the outer circumference of core 110 may extend in an annular shape or in a spiral shape. When this bundling band 140 is disposed to meander along the upper side and the under side of the circumference of coolant tube 130, bundling band 140 may be disposed to meander through adjoining coolant tubes 130 alternately one by one in the circumferential direction of core 110 as described above; may be disposed to meander alternately through each set of a plurality of coolant tubes extending in the same direction; or may be disposed to meander alternately through each set of an arbitrary unequal number of coolant tubes 130 extending in the same direction.

According to the bundling structure of the present example, among a plurality of coolant tubes 130, only coolant tube 130 having an upper side of the circumference on which bundling band 140 is put is bound on the core 110 side. For example, in the bundling structure shown in Fig. 24, among three coolant tubes 130, only a coolant tube C2 located in the middle in the parallel direction is bound on the core 110 side by a bundling band 140A. Accordingly, it is preferable that coolant tubes C1 and C3 not bound on the core 110 side by bundling band 140A are bound on the core 110 side by another bundling band 140B starting from the upper sides of the circumferences of coolant tubes C1 and C3. Another bundling band 140B also only has to be wound around a plurality of coolant tubes 130 as with bundling band 140A described above. The bundling structure of the present example is suitable when the number of coolant tubes 130 twisted around the outer circumference of core 110 is an even number. This is because when all of these coolant tubes are bound by an even number of bundling bands 140 on core 110, it becomes possible to use an equal number of coolant tubes 130 bound by one bundling band 140 around core 110.

{Functions and Effects}

According to the bundling structure of the present example, for a plurality of coolant tubes 130 arranged in parallel on the outer circumference of core 110, bundling band 140 is arranged so as to weave between adjoining coolant tubes 130. Thereby, the twisted state can be maintained even if coolant tubes 130 are S-Z twisted. Accordingly, it becomes possible to maintain the arrangement state of coolant tubes 130 with respect to core 110, so that core 100 can be cooled more reliably.

[Seventeenth Embodiment 17: Superconducting Cable: Bundling Structure B of Coolant Tube]

Then, a modification of the superconducting cable according to the first embodiment will be hereinafter described with reference to Fig. 24. The present examples also relates to a superconducting cable having a plurality of coolant tubes S-Z twisted around the outer circumference of the core, in which these coolant tubes are bound by a bundling band so as to prevent the twisted state from being untied. The difference from the sixteenth embodiment will be mainly explained in the following description.

{Configuration}

In the present example, as shown on the right side in Fig. 24, two types of bundling bands 140 including a main bundling band 140M and a sub-bundling band 140S are used. Main bundling band 140M collectively binds a plurality of coolant tubes 130 together along the outer circumference of the tubes. In other words, main bundling band 140M binds composite core unit 100c along its outer circumference. More specifically, main bundling band 140M is disposed on the outer circumference of composite core unit 100c in an annular manner, or disposed on the outer circumference of composite core unit 100c in a spiral manner. On the other hand, sub-bundling band 140S is used for maintaining the positions of some of coolant tubes 130 with respect to main bundling band 140M. More specifically, sub-bundling band 140S has a portion starting from the under side of the circumference of coolant tube C1, extending over the upper side of the circumference of main bundling band 140M extending between this coolant tube C1 and a coolant tube C2 adjacent thereto, and then reaching the under side of the circumference of coolant tube C2. As seen from another perspective of this bundling structure, if a coolant tube of three coolant tubes C1, C2 and C3 arranged in parallel on the outer circumference of core 110 that is located in the intermediate portion is assumed to be C2, sub-bundling portion 140S is disposed so as to continuously extend across the following three portions.

(1) A portion of main bundling band 140M that is located on the upper side of the circumference (on the side opposite to core 110) of a first bridging portion 1141M extending between coolant tubes C1 and C2 adjacent to each other;
(2) A portion on the under side of the circumference (core 110 side) of coolant tube C2; and
(3) A portion of main bundling band 140M that is located on the upper side of the circumference (on the side opposite to core 110) of a second bridging portion 142M extending between coolant tubes C2 and C3 adjacent to each other.

Sub-bundling band 140S extending across the outer circumference of first bridging portion 141M is further pulled into the under side of the circumference (on the core 110 side) of coolant tube C1. Sub-bundling band 140S extending across the outer circumference of second bridging portion 142M is further pulled into the under side of the circumference (on the core 110 side) of coolant tube C3. Thereby, it becomes possible to repeatedly provide a bundling structure in which sub-bundling band 140S extends sequentially through the three portions similarly as described in the above (1) to (3). Accordingly, this bundling structure can be provided on each coolant tube 130.

{Functions and Effects}

According to the bundling structure of the present example, the plurality of coolant tubes 130 arranged in parallel on the outer circumference of core 110 are collectively bound together across their outer circumferences by main bundling band 140M, and then, each of coolant tubes 130 is bound by sub-bundling band 140S with respect to main bundling band 140M. Accordingly, the positions of coolant tubes 130 with respect to the longitudinal direction of main bundling band 140M are maintained. Thus, even if coolant tubes 130 are S-Z twisted, the arrangement state of the coolant tubes with respect to core 110 can be maintained, so that core 110 can be cooled more reliably.

[Eighteenth Embodiment: Superconducting Cable: Bundling Structure C of Coolant Tube]

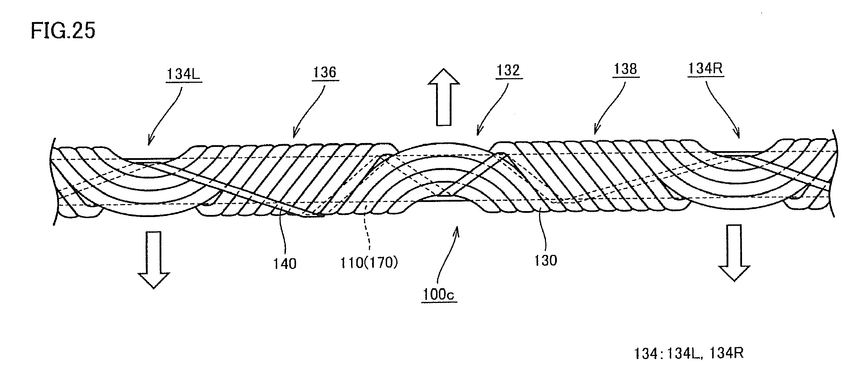

Then, a modification of the superconducting cable according to the first embodiment will be hereinafter described with reference to Fig. 25. The present example also relates to a superconducting cable having a plurality of coolant tubes S-Z twisted around the outer circumference of the core, in which these coolant tubes are bound by a bundling band so as to prevent the twisted state from being untied. The differences from the sixteenth embodiment will be mainly explained in the following description.

{Configuration}

In the present example, as seen from the lateral side of composite core unit 100c where a plurality of coolant tubes 130 are S-Z twisted around the outer circumference of core 110 (the outer circumference of inside housing tube 170, if any), inverted portions in which the twisting direction of coolant tubes 130 is inverted includes a convex inverted portion 132 in which coolant tube 130 is bent in a convex shape; and a concave inverted portion 134 that is adjacent to this convex inverted portion 132 and in which coolant tube 130 is bent in a concave shape. For such coolant tube 130, bundling band 140 binds convex inverted portion 132 and concave inverted portion 134 together so as to twist these convex inverted portion 132 and concave inverted portion 134 in the mutually opposite directions in the circumferential direction of the core toward the outside of the bend of coolant tube 130 in each of convex inverted portion 132 and concave inverted portion 134.
Fig. 25 shows a part of the above-described composite core unit 100c as seen in side view. This unit includes a left concave inverted portion 134L, a convex inverted portion 132 and a right concave inverted portion 134R that are sequentially formed from the left side. The arrangement configuration of bundling band 140 will be hereinafter described sequentially from the left side. First, bundling band 140 wound around the outer circumference of core 110 between coolant tubes 130 is caused to extend on the side of core 110 closer to the viewer of the figure, then put on the inside of the bend of coolant tube 130 in left concave inverted portion 134L, and then pulled out toward the upper side of the circumference (the side opposite to core 110) of coolant tube 130. Then, bundling band 140 is caused to extend along the upper side of the circumference of an S-twisted portion 136 formed between left concave inverted portion 134L and convex inverted portion 132, and wound from the side closer to the viewer of the figure toward the side farther away from the viewer of the figure. Then, near the boundary with convex inverted portion 132 of S-twisted portion 136, bundling band 140 is inserted between coolant tube 130 and core 110 through the gap between adjoining coolant tubes 130, and wound around core 110 toward the side closer to the viewer of the figure. Then, bundling band 140 is put on the inside of the bend of coolant tube 130 in convex inverted portion 132, and pulled out toward the upper side of the circumference of coolant tube 130 forming convex inverted portion 132. Then, near the boundary between convex inverted portion 132 and a Z-twisted portion 138, bundling band 140 is inserted between coolant tube 130 and core 110 through the gap between adjoining coolant tubes 130, and wound around core 110 toward the side farther away from the viewer of the figure. Then, bundling band 140 is caused to extend between core 110 and coolant tube 130 in Z-twisted portion 138 and on the side of core 110 closer to the viewer of the figure, then put on the inside of the bend of coolant tube 130 in right concave inverted portion 134R, and then pulled out toward the upper side of the circumference of coolant tube 130 in right concave inverted portion 134R.

When coolant tubes 130 are bound together by bundling band 140 in this way, left concave inverted portion 134L is to be twisted toward the outside of the bend of coolant tubes 130 (downward in the figure); convex inverted portion 132 is to be twisted toward the outside of the bend of coolant tubes 130 (upward in the figure); and right concave inverted portion 134R is to be twisted toward the outside of the bend of coolant tubes 130 (downward in the figure). Consequently, the twist of S-twisted portion 136 is to be tightened between left concave inverted portion 134L and convex inverted portion 132, and the twist of Z-twisted portion 138 is to be tightened between convex inverted portion 132 and right concave inverted portion 134R. By repeating similar arrangement of bundling band 140 sequentially in the longitudinal direction of composite core unit 100c, coolant tubes 130 can be bound together throughout the entire length of unit 100c.

In each of inverted portions 132 and 134, the number of coolant tubes 130 twisted toward the outside of the bend of coolant tubes 130 by one bundling band 140 is suitably equal to or less than half of the number of all coolant tubes twisted around the outer circumference of core 110, for example. This is because all of coolant tubes 130 can be readily bound in the direction in which the twist thereof is tightened.

{Functions and Effects}

According to the bundling structure of the present example, bundling band 140 is arranged with respect to a plurality of coolant tubes 130 that are S-Z twisted around the outer circumference of core 110 such that convex inverted portion 132 and concave inverted portion 134 are twisted in the mutually opposite directions and in the circumferential direction of the core and in the direction in which the twist of coolant tubes 130 in each of S-twisted portion 136 and Z-twisted portion 138 is tightened. Thereby, the twisted state of coolant tubes 130 can be maintained. Accordingly, the arrangement state of coolant tubes 130 with respect to core 110 can be maintained, so that core 110 can be cooled more reliably.

[Nineteenth Embodiment: Superconducting Cable: Pressed Winding]

Then, an explanation will be hereinafter given with regard to the superconducting cable having coolant tubes that are S-Z twisted (for example, the sixteenth to eighteenth embodiments), to which pressed winding is further applied. The present example is also identical in basic configuration to the first embodiment.

Particularly when coolant tubes are S-Z twisted, it is effective to use a bundling band for maintaining the twisted state. However, even if the S-Z twist is maintained, particularly in the cases of the sixteenth and eighteenth embodiments (Fig. 24), the coolant tubes are separated away from the core, or the envelope circle of the coolant tubes is displaced from the designed circle diameter and the designed shape. In addition, the bundling band may be broken. Accordingly, by conducting pressed winding so as to press the coolant tubes from the outside of the bundling band toward the core, the coolant tubes and the core are brought close to or brought into contact with each other. Also even when the bundling band is broken, the bundling band can be disposed such that the envelope circle of the plurality of coolant tubes may be maintained at the designed circle diameter and the designed shape.

As a specific example of pressed winding, a tape member may be wound in a spiral manner so as to collectively bind a plurality of coolant tubes. This manner of winding the tape member may be any of gap-winding, butt-winding and lap-winding. Also when the coolant tubes are not S-Z twisted, pressed winding may be applied. In addition, as a specific example of pressed-winding, a tape member may be wound in an annular shape so as to collectively bind a plurality of coolant tubes together. It is preferable that such pressed-winding is conducted several times at prescribed intervals in the longitudinal direction of the composite core unit.

The present invention is not limited to the above-described embodiments, but may be modified as appropriate without departing from the scope of the present invention.

INDUSTRIAL APPLICABILITY

The superconducting cable of the present invention can be utilized for construction of a long-distance superconducting cable line, and particularly, suitably utilized for construction of a long-distance DC superconducting cable line.

REFERENCE SIGNS LIST

100, 1000 superconducting cable, 100c composite core unit, 110, 110L, 110R core, 110u core unit, 111 former, 112 inside superconducting conductor layer, 113 insulating layer, 114 outside superconducting conductor layer, 115 normal-conducting layer, 116 protective layer, 112L, 112R inside conductor layer, 120 heat-insulating tube, 121 inner tube, 122 outer tube, 123 heat-insulating material, 124 anticorrosive layer, 130, $\alpha$g, $\alpha$r, $\beta$g1, $\beta$g2, $\beta$r1, $\beta$r2, $\alpha$gr, $\beta$gr1, $\beta$gr2 coolant tube, 130c coolant, 130L one pull-out portion, 130R the other pull-out portion, 130m coupling coolant tube, 130u coolant tube unit, 130a additional coolant tube, 132 convex inverted portion, 134 concave inverted portion, 134L left concave inverted portion, 134R right concave inverted portion, 136 S-twisted portion, 138 Z-twisted portion, 140, 140A, 140B bundling band, 140M main bundling band, 140S sub-bundling band, 141M first bridging portion, 142M second bridging portion, 150 housing tube, 160 heat-insulating material, 162 partial heat-insulating layer, 164 filled heat-insulating portion, 170 inside housing tube, 180 cushion member, CZ cooling zone, 210c first drum, 210p second drum, 220 under roller, 230 guide roller, 240 trumpet-shaped guiding tube, 250 S-Z twisting machine, 260 tape winding machine, 270 caterpillar feeder, 280 guide tube, 290 guide wire, 300 separation mechanism, 310 partition member, 320L, 320R, 340L, 340R, 360, 370 valve, 330L one exhaust tube, 330R the other exhaust tube, 330m communicating tube, 350 dividing case, 400 power extracting unit, 410 superconducting inside pull-out conductor, 410m, 440m coupling superconducting member, 420 one normal-conducting lead, 430, 460 insulation structure, 440 superconducting outside pull-out conductor, 450 the other normal-conducting lead, 470 terminal box, 480 pull-out box, 500g, 500r cooling-adjustment heat-insulating material, 1100E, 1200E terminal connection unit, 1000C intermediate connection unit, 1300 signal transmitting means, 1310 signal receiving means, 1320 cooling determination means, 1400 reflection signal receiving means, 1410 fault-point identifying means, E fault point.

**Claims**

1. A superconducting cable (1000) including a superconducting conductor layer (112, 114) and a flow path of a coolant (130c) cooling the superconducting conductor layer (112, 114) to a superconducting state, said superconducting cable comprising:

   a core (110) having said superconducting conductor layer (112, 114) and an insulating layer (113);
   a coolant tube (130) forming said coolant flow path and arranged in parallel to the core (110) so as to cool said superconducting conductor layer (112, 114); and
   a housing tube (150) of said core (110) and said coolant tube (130).

2. The superconducting cable (1000) according to claim 1, wherein a plurality of said coolant tubes (130) are twisted so as to surround an outer circumference of said core (110).

3. The superconducting cable (1000) according to claim 2, wherein said plurality of coolant tubes (130) surround a plurality of said cores (110).

4. The superconducting cable (1000) according to claim 2 or 3, wherein said core (110) and the plurality of coolant tubes (130) twisted to surround the outer circumference of the core (110) are combined to form a composite core unit (100c), and
   a plurality of the composite core units (100c) are provided within said housing tube (150).

5. The superconducting cable (1000) according to any one of claims 2 to 4, wherein
   said core (110) and a plurality of said coolant tubes (130) twisted to surround the outer circumference of the core (110) are combined to form a composite core unit (100c), and
   a plurality of additional coolant tubes (130a, 130u) arranged to surround an outer circumference of the composite core unit (100c) are provided.

6. The superconducting cable (1000) according to any one of claims 2 to 5, comprising a bundling band (140) binding said plurality of coolant tubes (130) together so as to prevent displacement of a twisted state of the coolant tubes.

**7.** The superconducting cable (1000) according to claim 6, wherein
said plurality of coolant tubes (130) are S-Z twisted around the core (110), and
said bundling band (140) has at least one of bundling structures including:

(A) a bundling structure in which said bundling band (140) binds the plurality of coolant tubes (130) so as to provide a portion starting from an under side of a circumference of a coolant tube (C1), extending over an upper side of a circumference of another coolant tube (C2) and reaching an under side of a circumference of still another coolant tube (C3);

(B) a bundling structure in which said bundling band (140) includes a main bundling band (140M) binding the plurality of coolant tubes (130) together along an outer circumference thereof, and a sub-bundling band (140S) having a portion starting from an under side of a circumference of a coolant tube (C1), put on an upper side of a circumference of the main bundling band (140M) extending between the coolant tube (C1) and a coolant tube (C2) adjacent thereto, and reaching an under side of a circumference of said coolant tube (C2); and

(C) a bundling structure in which said bundling band (140) binds a convex inverted portion (132) and a concave inverted portion (134) among inverted portions in which a twisting direction of the S-Z twisted coolant tubes (130) is inverted, such that the convex inverted portion (132) and the concave inverted portion (134) are twisted in mutually opposite directions in a circumference direction of the core (110) toward outside of a bend of the coolant tubes (130) in each of the inverted portions, said convex inverted portion (132) being formed of the coolant tubes (130) bent in a convex shape, and said concave inverted portion (134) being located adjacent to the convex inverted portion (132) and formed of the coolant tubes (130) bent in a concave shape.

**8.** The superconducting cable (1000) according to claim 6 or 7, comprising pressed winding for pressing said coolant tubes (130) from an upper side of a circumference of the bundling band (140) toward the core (110).

**9.** The superconducting cable (1000) according to any one of claims 1 to 8, wherein said coolant tube (130) is a straight tube or a corrugated tube.

**10.** The superconducting cable (1000) according to any one of claims 1 to 9, wherein
a plurality of the cores (110) are twisted, and
said cores are twisted so as to provide looseness such that shrinkage of each of the cores (110) caused during cooling can be absorbed.

**11.** The superconducting cable (1000) according to any one of claims 1 to 10, wherein a vacuum is produced inside said housing tube (150).

**12.** The superconducting cable (1000) according to any one of claims 1 to 10, comprising a heat-insulating material (160, 162, 164) with which said housing tube (150) is filled.

**13.** The superconducting cable (1000) according to any one of claims 1 to 12, comprising an inside housing tube (170) housing said core (110) and disposed inside with respect to said plurality of coolant tubes (130).

**14.** The superconducting cable (1000) according to claim 13, wherein said inside housing tube (170) forms a flow path of an auxiliary coolant with which a space between the inside housing tube (170) and said core (110) is filled.

**15.** The superconducting cable (1000) according to any one of claims 1 to 14, wherein said superconducting cable (1000) is for direct-current power transmission.

**16.** A method of installing a superconducting cable, comprising the steps of:

preparing a first drum (210c) around which a core (110) including a superconducting conductor layer (112, 114) and an insulating layer (113) or an inside housing tube (170) housing one or more cores (110) are/is wound, and a second drum (210p) around which a coolant tube (130) is wound that forms a flow path of a coolant (130c) for cooing said superconducting conductor layer (112, 114);

unreeling the core (110) or the inside housing tube (170) from said first drum (210c), unreeling the coolant tube (130) from said second drum (210p), which are collected, and twisting said coolant tube (130) around an outer circumference of said core (110) or said inside housing tube (170);

installing a housing tube (150) on an installation path; and

pulling a composite core unit (100c) formed of the twisted core (110) and coolant tube (130) into said housing tube (150) installed on the installation path, and housing said composite core unit (100c) therein.

17. The method of installing a superconducting cable according to claim 16, comprising the step of: providing a partial heat-insulating layer (162) on an inner circumferential surface of said housing tube (150) corresponding to an installation side for supporting said composite core unit (100c) substantially coaxially with the housing tube (150) when the composite core unit (100c) is pulled into afterward, housing said composite core unit (100c) in said housing tube (150), and filling a remaining space within said housing tube (150) with a heat-insulating material (164).

18. A superconducting cable line including a superconducting cable, said superconducting cable being the superconducting cable (1000) according to any one of claims 1 to 15, said superconducting cable line further comprising:

a separation mechanism (300) in an intermediate portion of said superconducting cable (1000), said separation mechanism (300) including
a partition member (310) partitioning an inside of said housing tube (150) into one space and the other space in a longitudinal direction,
one pull-out portion (130L) pulling out a coolant tube (130) within the one space to outside of the housing tube (150),
the other pull-out portion (130R) pulling out a coolant tube (130) within the other space to outside of the housing tube (150), and
a coupling coolant tube (130m) coupling both of the pull-out portions (130L, 130R).

19. The superconducting cable line according to claim 18, wherein
a vacuum is produced inside said housing tube (150), said superconducting cable line further comprising:

one exhaust tube (330L) in communication with one space from outside of said housing tube (150),
the other exhaust tube (330R) in communication with the other space from outside of said housing tube (150), and
a communicating tube (330m) connecting both of the exhaust tubes (330L, 330R).

20. A superconducting cable line including a superconducting cable, and a plurality of cooling stations for circulating a coolant for cooling the superconducting cable along the superconducting cable,
said superconducting cable being the superconducting cable (1000) according to any one of claims 1 to 15,
said coolant tube (130) including
a coolant tube ($\alpha$g) serving as a coolant forward path;
a coolant tube ($\alpha$r) arranged in parallel to the coolant tube ($\alpha$g) and serving as a coolant return path;
a coolant tube ($\beta$g) serving as another coolant forward path; and
a coolant tube ($\beta$r) arranged in parallel to the coolant tube ($\beta$g) and serving as another coolant return path,
said cooling stations including
cooling stations (A1, A2) connected to both ends, respectively, of each of the coolant tube ($\alpha$g) and the coolant tube ($\alpha$r); and
cooling stations (B1, B2) connected to both ends, respectively, of each of the coolant tube ($\beta$g) and the coolant tube ($\beta$r), and
the cooling stations (A1, A2) and the cooling stations (B1, B2) being provided such that a section where said coolant tubes ($\alpha$g, $\alpha$r) are arranged and a section where said coolant tubes ($\beta$g, $\beta$r) are arranged are displaced in a longitudinal direction of the superconducting cable.

21. A method of operating a superconducting cable line,
said superconducting cable line being the superconducting cable line according to claim 20, wherein
a plurality of sets of cooling sections of said cooling stations (A1, A2) and said coolant tubes ($\alpha$g, $\alpha$r), and a plurality of sets of cooling sections of said cooling stations (B1, B2) and said coolant tubes ($\beta$g, $\beta$r) are arranged in a longitudinal direction of the superconducting cable, and
when one of said cooling stations (A1, A2) and said cooling stations (B1, B2) is inoperable, a cooling section corresponding to the inoperable cooling station is cooled using a plurality of operable cooling stations that share cooling of the cooling section adjacent thereto.

22. A superconducting cable line including a superconducting cable, and a plurality of cooling stations for circulating a coolant for cooling the superconducting cable along the superconducting cable,
said superconducting cable being the superconducting cable (1000) according to any one of claims 1 to 15,

said coolant tube (130) including
a coolant tube (αgr) forming a series of forward-and-return paths within said housing tube (150); and
a coolant tube (βgr) forming another series of forward-and-return paths within said housing tube (150),
said cooling stations including
a cooling station (X1) connected to a coolant feed end and a coolant return end of said coolant tube (αgr); and
a cooling station (Y1) connected to a coolant feed end and a coolant return end of said coolant tube (βgr), and
the cooling stations (X1, Y1) being disposed such that a section where said coolant tube (αgr) is arranged and a section where said coolant tube (βgr) is arranged are displaced in a longitudinal direction of the superconducting cable.

23. A method of operating a superconducting cable line,
said superconducting cable line being the superconducting cable line according to claim 22, wherein
a plurality of sets of cooling sections of said cooling station (X1) and said coolant tube (αgr), and a plurality of sets of cooling sections of said cooling station (Y1) and said coolant tube (βgr) are arranged in a longitudinal direction of the superconducting cable, and
when one of said cooling station (X1) and said cooling station (Y1) is inoperable, a cooling section corresponding to the inoperable cooling station is cooled using a plurality of operable cooling stations that share cooling of the cooling section adjacent thereto.

24. A superconducting cable line including a superconducting cable, and a plurality of cooling stations for circulating a coolant for cooling the superconducting cable along the superconducting cable,
said superconducting cable being the superconducting cable (1000) according to any one of claims 1 to 15, wherein
said superconducting conductor layer (112, 114) includes an inside conductor layer (112L, 112R) disposed inside said insulating layer (113) and an outside conductor layer disposed outside said insulating layer (113),
said superconducting cable line further comprises a power extracting unit (400) disposed in an intermediate portion of said superconducting cable (1000) for supplying electric power to said cooling station,
said power extracting unit (400) includes
a superconducting inside pull-out conductor (410) connected to the inside conductor layer (112L, 112R) pulled out from said core (110),
a superconducting outside pull-out conductor (440) connected to the outside conductor layer pulled out from said core (110),
a terminal box (470) filled with the coolant cooing both of the pull-out conductors (410, 440),
one normal-conducting lead (420) connected to said superconducting inside pull-out conductor (440) to form an electric path extending from said terminal box (470) toward a room temperature side, and
the other normal-conducting lead (450) connected to said superconducting outside pull-out conductor (440) to form an electric path extending from said terminal box (470) toward the room temperature side, and
said cooling station is configured to cool the coolant (130c) by supplying electric power from said superconducting cable (1000) through both of the normal-conducting leads (420, 450), and supply the coolant (130c) to each coolant tube (130).

25. A superconducting cable line having a superconducting cable,
said superconducting cable being the superconducting cable according to claim 14, said superconducting cable line comprising:

a cooling station for an auxiliary coolant by which an auxiliary coolant introduced into said inside housing tube (170) is caused to circulate slower than the coolant flowing through said coolant tube (130).

26. A superconducting cable line including a superconducting cable, and a plurality of cooling stations for circulating a coolant for cooling the superconducting cable along the superconducting cable,
said superconducting cable being the superconducting cable according to any one of claims 1 to 15, wherein
said coolant tube (130) includes
a coolant tube (αg) serving as a coolant forward path, and
a coolant tube (αr) arranged in parallel to the coolant tube (αg) and serving as a coolant return path,
said cooling stations include cooling stations (A1, A2) connected to both ends, respectively, of each of the coolant tube (αg) and the coolant tube (αr), and
a cooling-adjustment heat-insulating material (500g, 500r) covering each of the coolant tubes (αg, αr) is provided on each of a coolant feed end side of said coolant tube (αg) connected to the cooling station (A1) and a coolant feed end side of said coolant tube (αr) connected to the cooling station (A2).

27. A superconducting cable line including a superconducting cable, and a plurality of cooling stations for circulating a coolant for cooling the superconducting cable along the superconducting cable,
said superconducting cable being the superconducting cable according to any one of claims 1 to 15, wherein
said coolant tube (130) includes
a coolant tube ($\alpha$g) serving as a coolant forward path, and
a coolant tube (or) arranged in parallel to the coolant tube ($\alpha$g) and serving as a coolant return path,
said cooling stations include
a cooling station (A1) disposed at a relatively low position and
a cooling station (A2) disposed at a relatively high position, said cooling station (A1) and said cooling station (A2) being connected to both ends, respectively, of each of the coolant tube ($\alpha$g) and the coolant tube (or), and
a cooling-adjustment heat-insulating material (500g, 500r) covering each of the coolant tubes ($\alpha$g, $\alpha$r) is provided on each of a coolant feed end side of said coolant tube ($\alpha$g) connected to the cooling station (A1) at the relatively low position and a coolant return end side of said coolant tube ($\alpha$r) connected to the cooling station (A1) at the relatively low position.

28. A superconducting cable line including a superconducting cable, and a plurality of cooling stations for circulating a coolant for cooling the superconducting cable along the superconducting cable,
said superconducting cable being the superconducting cable (1000) according to any one of claims 1 to 15, and
a coolant (130c) circulating through said coolant tube (130) being slush nitrogen.

29. A superconducting cable line including a superconducting cable,
said superconducting cable being the superconducting cable (1000) according to any one of claims 1 to 15, said superconducting cable line comprising:

> signal transmitting means (1300) for causing an electrical signal to be input from one end side of the superconducting cable line into said superconducting conductor layer (112, 114);
> signal receiving means (1310) for receiving the signal that has been output on the other end side of the superconducting cable (1000); and
> cooling determination means (1320) for determining based on a state of the output signal received by the signal receiving means whether said superconducting conductor layer (112, 114) reaches a temperature at which said superconducting conductor layer is brought into a superconducting state throughout an entire length of said line.

30. The superconducting cable line according to claim 29, comprising:

> reflection signal receiving means (1400) for receiving a reflection signal of said electrical signal at a fault point (E) on one end side of the superconducting cable line, said fault point (E) being a portion where the superconducting conductor layer (112, 114) is not sufficiently cooled locally in an intermediate portion of said superconducting cable line; and
> fault-point identifying means (1410) for calculating a position of the fault point (E) based on a transmission rate of each of said electrical signal and said reflection signal, and on a time period from a time when the electrical signal is input by said signal transmitting means (1300) until a time when the reflection signal is received by said reflection signal receiving means (1400).

FIG.1

100c: 110, 130, 170

FIG.2

100c: 110, 130, 170

FIG.3

116
114
113
112
111
110

FIG.4

130c
CZ
130
150
170
110

100c : 110, 130, 170

FIG.5

1000

150

170

130

130c

110

100c : 110, 130, 170

FIG.6

1000

150

130

130c

110

FIG.7

160 : 162, 164
100c : 110, 130, 170

FIG.8

160 : 162, 164

FIG.9

FIG.10

EP 2 790 190 A1

FIG.11

FIG.12

FIG.13

130 : 130L, 130R

FIG.14

FIG.15

FIG.16

FIG.17

EP 2 790 190 A1

FIG.18

1310

1320

1300

1410

1400

1200E

1000

1000C

1100E

1000

E

FIG.19

FIG.20

100c : 110, 130, 170

FIG.21

100c : 110, 130, 170

FIG.22

100c : 110, 130, 170

FIG.23

100c : 110, 130, 170

FIG.24

$130 : C_1, C_2, C_3$

FIG.25

134:134L, 134R

EP 2 790 190 A1

FIG.26

# INTERNATIONAL SEARCH REPORT

| International application No. |
| --- |
| PCT/JP2012/066128 |

**A. CLASSIFICATION OF SUBJECT MATTER**
*H01B12/08*(2006.01)i, *H01B12/16*(2006.01)i, *H01L39/04*(2006.01)i, *H02G15/34*
(2006.01)i

According to International Patent Classification (IPC) or to both national classification and IPC

**B. FIELDS SEARCHED**

Minimum documentation searched (classification system followed by classification symbols)
H01B12/08, H01B12/16, H01L39/04, H02G15/34

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2-299108 A  (The Furukawa Electric Co., Ltd.), | 1-3,6,8,9, 11,15 |
| Y | 11 December 1990 (11.12.1990), entire text; all drawings (Family: none) | 10,28 |
| Y | JP 2007-200783 A  (Sumitomo Electric Industries, Ltd.), 09 August 2007 (09.08.2007), claim 1 (Family: none) | 10 |
| Y | JP 2009-009908 A  (Mayekawa Mfg., Co., Ltd.), 15 January 2009 (15.01.2009), claim 1 (Family: none) | 28 |

| ☒  Further documents are listed in the continuation of Box C. | ☐  See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 14 August, 2012 (14.08.12) | 21 August, 2012 (21.08.12) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**INTERNATIONAL SEARCH REPORT**

International application No.

PCT/JP2012/066128

C (Continuation).    DOCUMENTS CONSIDERED TO BE RELEVANT

| Category* | Citation of document, with indication, where appropriate, of the relevant passages | Relevant to claim No. |
|---|---|---|
| A | WO 2007/034631 A1  (Sumitomo Electric Industries, Ltd.), 29 March 2007 (29.03.2007), paragraph [0015] & JP 2007-89343 A          & US 2010/0021113 A1 & EP 1928067 A1          & CA 2594584 A & CN 101091294 A          & NO 20072298 A & KR 10-2008-0055746 A | 29-30 |
| A | JP 1-283710 A  (Hitachi, Ltd.), 15 November 1989 (15.11.1989), entire text; all drawings (Family: none) | 29-30 |
| A | JP 2006-012775 A  (Sumitomo Electric Industries, Ltd.), 12 January 2006 (12.01.2006), claim 12 & US 2008/0257579 A1     & EP 1860667 A1 & WO 2006/098069 A1     & CA 2597994 A & NO 20075178 A          & KR 10-2007-0112172 A & CN 101142636 A          & MX 2007011073 A & RU 2007134218 A          & CN 101916620 A | 1-30 |
| A | JP 2004-227939 A  (Sumitomo Electric Industries, Ltd.), 12 August 2004 (12.08.2004), paragraphs [0033] to [0040]; fig. 1 & US 2005/0079980 A1     & EP 1441367 A2 & KR 10-2004-0067954 A   & CN 1518009 A | 1-30 |
| A | JP 2006-140123 A  (Sumitomo Electric Industries, Ltd.), 01 June 2006 (01.06.2006), paragraphs [0062] to [0065]; fig. 4 (Family: none) | 1-30 |
| A | JP 2006-012776 A  (Sumitomo Electric Industries, Ltd.), 12 January 2006 (12.01.2006), paragraphs [0047] to [0049]; fig. 3 & US 2008/0164048 A1     & EP 1860666 A1 & WO 2006/098068 A1     & CA 2598343 A & NO 20075177 A          & KR 10-2007-0112170 A & CN 101142637 A          & MX 2007011075 A & RU 2007134217 A          & HK 1115222 A | 1-30 |
| A | JP 9-045151 A  (Sumitomo Electric Industries, Ltd.), 14 February 1997 (14.02.1997), entire text; all drawings (Family: none) | 1-30 |

Form PCT/ISA/210 (continuation of second sheet) (July 2009)

**REFERENCES CITED IN THE DESCRIPTION**

**Patent documents cited in the description**

- JP 2011028936 A